(19) Europäisches Patentamt
European Patent Office
Office européen des brevets

(11) **EP 2 936 665 B1**

(12) **EUROPÄISCHE PATENTSCHRIFT**

(45) Veröffentlichungstag und Bekanntmachung des Hinweises auf die Patenterteilung:
**06.02.2019 Patentblatt 2019/06**

(51) Int Cl.:
*H02K 33/16* (2006.01)    *H01F 7/02* (2006.01)
*H01F 7/06* (2006.01)    *H01F 7/16* (2006.01)
*H01F 7/20* (2006.01)    *H02P 25/02* (2016.01)

(21) Anmeldenummer: **13843061.6**

(22) Anmeldetag: **23.12.2013**

(86) Internationale Anmeldenummer:
**PCT/EP2013/077888**

(87) Internationale Veröffentlichungsnummer:
**WO 2014/096444 (26.06.2014 Gazette 2014/26)**

(54) **MAGNETVORRICHTUNG UMFASSEND EINE AUF DEN TRANSLATOR WIRKENDE BESCHLEUNIGUNGSEINHEIT**

MAGNET DEVICE COMPRISING AN ACCELERATION UNIT WHICH ACTS ON THE TRANSLATOR

DISPOSITIF MAGNÉTIQUE COMPRENANT UNE UNITÉ D'ACCÉLÉRATION AGISSANT SUR LE TRANSLATEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **21.12.2012 AT 13342012**

(43) Veröffentlichungstag der Anmeldung:
**28.10.2015 Patentblatt 2015/44**

(73) Patentinhaber: **SEH Limited**
**Birkirkara BKR 1501 (MT)**

(72) Erfinder:
• **HEIN, Jeremy**
**98000 Monaco (MC)**
• **MARSCHNER VON HELMREICH, Martin**
**98000 Monaco (MC)**

(74) Vertreter: **Ellmeyer, Wolfgang**
**Häupl & Ellmeyer KG**
**Patentanwaltskanzlei**
**Mariahilfer Strasse 50**
**1070 Wien (AT)**

(56) Entgegenhaltungen:
EP-A2- 1 995 090         WO-A1-2007/063222
DE-A1- 10 003 928        DE-A1-102006 013 013
DE-A1-102007 051 917     US-B1- 8 222 754

**Beschreibung**

Diese Erfindung betrifft eine Magnetvorrichtung umfassend zumindest einen magnetisch erregten Stator und einen magnetisch erregten Translator, welcher Translator entlang einer Translatorbewegungsbahn relativ zum Stator bewegbar ist, wobei der Stator ein Permanentmagnet und der Translator ein Elektromagnet ist oder der Stator ein Elektromagnet und der Translator ein Permanentmagnet ist, wobei eine magnetische Kraft $F(x,J)$ zwischen dem Stator und dem Translator mit $x \geq 0$ als der Abstand zwischen Stator und Translator und $J$ als die Stromdichte des Elektromagneten wirkt, wobei eine Beschleunigungseinheit in zumindest Teilbereichen der Translatorbewegungsbahn eine Kraft auf den Translator ausübt, die einen Beschleunigungskraftzustand umfassend zumindest eine Korrekturkraft $F_{corr}(x)$ hervorruft, welcher Beschleunigungskraftzustand vom Stator weg gerichtet ist.

Im Sinne einer Vereinfachung wird der Statormagnet im Folgenden kurz als Stator, der Translatormagnet im Folgenden kurz als Translator bezeichnet.

Magnetantriebe nach dem Stand der Technik umfassen zumindest einen Stator und einen Translator, welcher unter Ausnutzung der zwischen dem Stator und dem Translator wirkenden magnetischen Anziehungskräfte und Abstoßungskräfte relativ zum Stator bewegbar ist. Aus AT20110001260 20110905 (Anmelder Jeremy Hein, Martin Marschner von Helmreich) ist bekannt, dass die Anziehungskräfte und die Abstoßungskräfte im Wesentlichen eine Funktion des Abstandes zwischen Stator und Translator sind. Die Summe der auf den Translator wirkenden Kräfte, welche eine Bewegung des Translators hervorrufenden, ist durch die Wahl eines Abstandes des Translator zu dem näher liegenden Stator optimierbar.

Es kann auf den zum Stator bewegten Translator in einem Abstand r zum Stator der auf den Translator wirkende, durch die magnetischen Anziehungskräfte bedingte Kräftezustand sein Maximum erreichen. Bei einer umgekehrten Bewegungsrichtung des Translators, das heißt bei einer Bewegung des Translators vom Stator weg können jedoch zwischen dem Stator und dem bewegten Translator Anziehungskräfte wirken, wenn der Abstand r hinreichend klein ist. Bei einem hinreichend kleinen Abstand zwischen Stator und Translator wirken Stator und Translator nämlich unabhängig von der Polung des Stators und des Translators als ein Magnet. Der hinreichend kleine Abstand ist unter anderem durch die Feldstärke des Translators in Bezug zum Stator oder umgekehrt gegeben. Die Feldstärke des Translators kann während des Betriebes einer Magnetvorrichtung, beispielsweise während des Zeitpunktes des Umpolens eines Elektromagneten gering gegenüber dem Stator ausfallen.

Im Falle eines hinreichend kleinen Abstandes zwischen Stator und Translator wird eine Bewegung des Translators vom Stator weg durch die zwischen Stator und Translator wirkenden Anziehungskräfte unterbunden oder gebremst. Dieser nach dem Stand der Technik bekannte Effekt wird als "Fangen" des Translators am Stator bezeichnet. Die Leistung einer beispielsweise als Magnetantrieb dienenden Magnetvorrichtung wird dadurch verringert.

DE10003928 gleichwie wie der in DE10003928 genannte Stand der Technik offenbaren Magnetvorrichtungen, weiche an den Endpositionen der Bewegungsbahnen des Translators Elektromagnete umfassen. Zum Bewegen des Translators von einer ersten Endposition in eine zweite Endposition wird der Elektromagnet in der ersten Endposition ausgeschaltet (siehe DE10003928, Spalte 1, Zeilen 23-24, D1 Spalte 6, Zeilen 19-22). Aufgrund des Abschaltens des Elektromagneten in der ersten Endposition kann - wie in der Beschreibungseinleitung der Patentanmeldung dargelegt - das Problem des Loslösens des Translators vom Magneten in der ersten Endposition nicht behandelt werden. In DE10003928 hat die Feder die Aufgabe, den Translator bei ausgeschalteten Elektromagneten in eine bestimmte Lage zu bringen.

WO2007063222 offenbart auf Seite 3, Zeilen 10-13, dass das Ventil bei keinem durch die Elektromagnete hervorgerufenem (Kräfte)Ungleichgewicht offen ist. Die Offenstellung (Gleichgewichtslage) wird beispielsweise durch eine Feder erreicht.

Die Wirkung der Feder unterscheidet sich somit von der Wirkung der in der Patentanmeldung offenbarten Beschleunigungseinheit. Das Problem des Fangens wird in WO2007063222 nicht thematisiert.

DE102007051917 offenbart eine Vorrichtung umfassend zumindest einen Elektromagneten und eine Feder, wobei Feder und Elektromagnet in einem Wechselspiel zueinander stehen. Gemäß DE102007051917 [0009] kann der Translator durch eine Bestromung oder Nicht-Bestromung des Elektromagneten in eine Endposition bewegt werden.

Es ist DE102007051917 kein Hinweis zu entnehmen, dass die Feder zum Lösen des Translators von einem Elektromagneten dient. Da die in der Patentanmeldung offenbarte Wirkung der Feder in DE102007051917 nicht erwähnt ist, ist der neue Anspruch 1 im Vergleich zu DE102007051917 als neu anzusehen.

Gemäß Offenbarung von DE102006013013 Absatz [0017] dienen die Federn zur Überwindung der Haftung der Ankerplatte am ausgeschalteten Elektromagneten aufgrund von Remanenz. Diese Wirkung der Federn entspricht nicht der in der Patentanmeldung offenbarten Wirkung der Federn.

Gemäß Offenbarung der Patentanmeldung bewirkt die Beschleunigungseinheit ein Loslösen des Translators vom Stator, welche als ein Magnet wirken. Dies bedingt, dass kein Elektromagnet ausgeschaltet ist. Es wird auf die obige Argumentation verweisen, weshalb der Anspruch 1 im Vergleich zu DE102006013013 neu ist.

EP1995090 offenbart in Absatz [0032], dass die Feder ein rein unterstützendes Element (support spring for supporting the vehicle). Die in der Patentanmeldung offenbarte Wirkung der Beschleunigungseinheit ist in D5 nicht beschrieben.

Gemäß Offenbarung von US8222754 ist die Feder ein Teil eines Schwingsystems. US8222754 offenbart nicht eine zu der in der Patentanmeldung offenbarte Wirkung der Beschleunigungseinheit ähnliche Wirkung. Der Anspruch 1 ist im Vergleich zu D6 als neu anzusehen.

Es ist in EP1320178 ebenso keine Größenangabe für die zusätzlich zum elektromagnetischen Linearantrieb wirkende Feder angegeben. Die Problematik des Wirkens von Stator und Translator als ein Magnet bei einer hinreichenden Annäherung des Translators zum Stator wird in EP1320178 ebenso nicht behandelt, sodass der Fachmann aus EP1320178 die Größe der Federkraft nicht ableiten kann oder eine Wirkung der in EP1320178 beschriebenen Feder ähnlich zu der im Folgenden beschriebenen Beschleunigungseinheit ableiten kann. DE102997051917 offenbart eine Magnetvorrichtung umfassend einen als Elektromagnet ausgebildeten Aktor und ein Federelement zur Erzeugung einer Kraft in Bewegungsrichtung. Es findet sich in DE102997051917 kein Hinweis auf die im Rahmen dieser Offenbarung diskutierte Problematik des Wirkens von Stator und Translator als ein Magnet zumindest bei hinreichend Annäherung des Translators zum Stators. Folglich stellt sich der Fachmann nicht der Aufgabe der Schaffung eines im Folgenden beschriebenen erfindungsgemäßen Kräftegleichgewichtes beziehungsweise Kräfteungleichgewichtes. DE102997051917 umfasst keine Angabe betreffend der Größe der zu erzeugenden Kraft in Bewegungsrichtung, sodass der Fachmann aus DE102997051917 die Größe der Federkraft nicht ableiten kann.

DE10003928 offenbart einen elektromagnetischen Aktuator mit einem auf den Translator wirkenden Federmechanismus. Gemäß Offenbarung von DE10003928 wirkt der Federmechanismus als Umschwungmechanismus des Translators. Das dieser Erfindung zu Grunde liegende Problem des Lösens des Translator vom Stator bei einer Bewegung des Translators weg vom Stator ist in DE10003928 nicht behandelt.

In WO2007063222 hat die Feder die Aufgabe, im Falle eines Ausfalles einer Spule den Aktor in eine Schließstellung zu bringen. Es somit in WO2007063222 das dieser Erfindung zu Grunde liegende Problem nicht behandelt.

Die Feder der in DE202009014192 offenbarten Vorrichtung hat keine Wirkung auf die Bewegung des Translators, sondern dient zum Koppeln mehrerer Vorrichtungen.

Die hier diskutierte Erfindung stellt sich die Aufgabe, eine Magnetvorrichtung bereitzustellen, welche Magnetvorrichtung im Vergleich zu Vorrichtungen nach dem Stand der Technik einen zusätzlichen Bestandteil umfasst, welcher den Effekt des Fanges des Translators am Stator reduziert oder unterbindet. Im Folgenden wird der durch den Effekt des Fanges hervorgerufene Kraftzustand als Fangkraftzustand bezeichnet.

Erfindungsgemäß wird dies dadurch erreicht, dass $F(x, J = 0)$ einen magnetischen Fangeffekt definiert, der einer Sollbewegung des Translators entgegenwirkt, wobei $F(x, J = 0)$ bei keiner Beaufschlagung des Elektromagneten durch Messungen bestimmbar ist, und dass

(a) bei einer Bewegung des Translators vom Stator die Summe der auf den Translator wirkenden Kräfte größer Null ist

$$F(x, J = 0) + F_{corr}(\mathrm{x}) > 0, \text{ wobei gilt } F_{corr}(\mathrm{x}) > -F(x, J = 0),$$

oder

(b) bei einer Bewegung des Translators zum Stator die Summe der auf den Translator wirkenden Kräfte kleiner Null ist

$$F(x, J = 0) + F_{corr}(\mathrm{x}) < 0, \text{ wobei gilt } F_{corr}(\mathrm{x}) < -F(x, J = 0),$$

oder

(c) bei einem Gleichgewichtszustand des Translators zum Stator die Summe der auf den Translator wirkenden Kräfte gleich Null ist

$$F(x, J = 0) + F_{corr}(\mathrm{x}) = 0, \text{ wobei gilt } F_{corr}(\mathrm{x}) = -F(x, J = 0),$$

sodass die Korrekturkraft $|F_{corr}(\mathrm{x})| \geq |F(x, J = 0)|$ dem Fangeffekt teilweise oder zur Gänze entgegenwirkt. Die erfindungsgemäße Magnetvorrichtung kann ein Magnetantrieb, ein Generator, ein Widerstandselement oder eine sonstige Vorrichtung sein, bei welcher ein Translator relativ zum Stator in der Hauptsache oder auch nur zum Teil aufgrund von durch Magnetfelder hervorgerufene Kräfte bewegt wird.

Bei einem hinreichend kleinem Abstand des Translators zum Stator wirken Stator und Translator als ein Magnet, sodass der Translator zum Stator bewegt wird.

Der durch die Beschleunigungseinheit hervorgerufene Beschleunigungskraftzustand ist vom Stator weg gerichtet. Die Wirkung des Beschleunigungskraftzustandes kann auf den Teilbereich der Translatorbewegungsbahn begrenzt sein, in welchem der oben beschriebene Fangeffekt auftritt.

Der Beschleunigungskraftzustand kann in Teilbereichen der Translatorbewegungsbahn durch den Fangkraftzustand überlagert sein. Der Fangkraftzustand ist im Wesentlichen durch die zwischen dem Stator und dem Translator wirkende Anziehungskraft geprägt. Der Beschleunigungskraftzustand wirkt in Abhängigkeit seiner betragsmäßigen Größe dem Fangkraftzustand teilweise oder zur Gänze entgegen.

Die Beschleunigungseinheit kann den Kraftzustand auf der Basis von mechanisch generierten Kräften oder Magnetkräften hervorrufen. Die Beschleunigungseinheit kann den Beschleunigungskraftzustand durch eine zuvor erfolgte Deformation eines zumindest teilweise elastisch verformten Körpers wie beispielsweise eine Feder hervorrufen. Die Deformation des elastischen Körpers kann durch eine Bewegung des Translators hervorgerufen werden. Im Regelfall wird die Deformation des elastischen Körpers während einer Bewegung des Translators zumindest teilweise zum Stator vor dem Auftreten des Fangeffektes und/oder vor Erreichen des Translators eines Bereiches hinreichend nahe zum Stator, in welchem der Fangeffekt nachfolgend auftritt, hervorgerufen werden.

Eine Ausführungsform der erfindungsgemäßen Magnetvorrichtung kann dadurch charakterisiert sein, dass die Beschleunigungseinheit über die gesamte Translatorbewegungsbahn wirkend mit dem Translator gekoppelt ist.

Die Beschleunigungseinheit kann in Abhängigkeit eines Abstandes des Translators zum Stator bei Annäherung des Translators zum Stator vorspannbar sein und/oder die Beschleunigungseinheit kann in Abhängigkeit des Abstandes des Translators zum Stator den Beschleunigungskraftzustand hervorrufen.

Bei Koppelung des Translators mit der Beschleunigungseinheit und bei Bewegung des Translators zum Stator kann die Summe der auf den Translator wirkenden Kräfte kleiner oder gleich Null sein.

Bei Koppelung des Translators mit der Beschleunigungseinheit und bei Bewegung des Translators vom Stator kann die Summe der auf den Translator wirkenden Kräfte größer oder gleich Null sein.

Die hier offenbarte, erfindungsgemäße Magnetvorrichtung ist nicht auf die Positionierung der Beschleunigungseinheit in einem Bereich zwischen Stator und Translator beschränkt. Die Positionierung der Beschleunigungseinheit in eben diesem Bereich stellt lediglich eine Möglichkeit der erfindungsgemäßen Positionierung der Beschleunigungseinheit dar. Die Beschleunigungseinheit kann weiters seitlich zu der Translatorbewegungsbahn, sich in einem beliebigen Winkel zu der Translatorbewegungsbahn erstreckend angeordnet sein.

Die Feder kann auch einstückig mit einem Lagerelement ausgebildet sein, welches die Funktion der Lagerung des auf einer Translatorachse gleitenden Translators erfüllt. Die Feder kann als Blattfeder oder als Spiralfeder ausgebildet sein. Das Lagerelement kann einen elastischen Werkstoff umfassen, welcher elastische Werkstoff bei Betrieb der erfindungsgemäßen Magnetvorrichtung deformiert wird.

Nach dem Stand der Technik ist die auf einen Translator wirkende Kraft eine Summe der in diesem Bereich wirkenden Statoren und Translatoren in Abhängigkeit des Abstandes zwischen dem jeweiligen Stator und dem jeweiligen Translator. Die zwischen dem Stator und dem sich vom Stator wegbewegenden Translator bei Auftreten des oben beschriebenen Fangeffektes wirkende Kraft verhält sich bei einer entsprechenden Ausbildung der Feder hierzu analog. Die hier offenbarte Erfindung kann sich dadurch auszeichnen, dass die Beschleunigungseinheit in Abhängigkeit des temporären Abstandes des Translators zum Stator den Beschleunigungskraftzustand hervorruft.

Obiges Charakteristikum der Beschleunigungseinheit kann beispielsweise aufgrund einer über die Federlänge unterschiedliche geometrische Ausbildung der Feder oder aufgrund von über die Federlänge unterschiedlichen Materialeigenschaften der Feder erreicht werden. In hierzu analoger Weise ist beispielsweise ein elastisch verformbarer Körper auszubilden.

Es kann sich die folgende Ausführungsform der erfindungsgemäßen Magnetvorrichtung als vorteilhaft erweisen, wenn die Beschleunigungseinheit in Abhängigkeit des sich dem Stator nähernden Translators vorgespannt wird. Unter einer Vorspannung wird im Rahmen der Diskussion dieser Erfindung ähnlich wie beim Vorspannen einer Feder ein Zustand beschreiben, in welchem die Beschleunigungseinheit eine auf die Beschleunigungseinheit aufgebrachte Kraft oder Verzerrung zu einer Abgabe zu einem späteren Zeitpunkt speichert. Erfindungsgemäß erfolgt die spätere Abgabe der aufgebrachten Kraft oder Verzerrung zum Lösen des am Stator gefangenen Translators.

Eine mögliche Ausführungsform der erfindungsgemäßen Magnetvorrichtung kann dadurch gekennzeichnet sein, dass die Beschleunigungseinheit mit dem Translator und einem Fixpunkt gekoppelt ist und sich zumindest zum Teil zwischen dem Translator und dem Fixpunkt erstreckt.

Der Fixpunkt kann ein außerhalb der erfindungsgemäßen Vorrichtung liegendes Objekt sein. Der Fixpunkt kann weiters ein Vorrichtungsteil wie beispielsweise ein Maschinenrahmen oder ein Gehäuseteil sein. Der Fixpunkt kann in Bezug zu Stator unbeweglich oder verschieblich gelagert sein.

Der Stator kann als Fixpunkt ausgebildet sein.

Die Beschleunigungseinheit kann ein weiterer Magnet sein, welcher mit dem Translator gekoppelt ist und zur Beschleunigung des Translators zugeschalten wird. Der weitere Magnet kann ein Permanentmagnet und/oder ein Elektromagnet sein.

Die Beschleunigungseinheit kann weiters einen Antrieb umfassen, sodass bei Koppelung des Antriebes mit dem Translator der Kraftzustand gemäß dem Kern dieser Erfindung verwendet werden kann. Der Antrieb kann beispielsweise ein Elektromotor und/oder eine Pneumatikvorrichtung oder Hydraulikvorrichtung nach dem Stand der Technik sein.

Die Beschleunigungseinheit kann als eine Feder ausgebildet sein, welche Feder eine parallel zur Translatorbewegungsbahn wirkende Federkraftkomponente aufweist.

Die Federkraftkomponente wirkt somit entgegengerichtet zu den durch den Fangeffekt bedingten Kräften. Die Feder wird durch die Bewegung des Translators zum Stator vorgespannt, wobei die Abgabe der in der Feder gespeicherten Kraft während des Bewegens des Translators vom Stator weg erfolgt.

Obige Darstellung betrifft sowohl eine linear oder eine polygonal verlaufende Translatorbewegungsbahn. Ein Strahl der Translatorbewegungsbahn kann durch den Stator verlaufen.

Die möglichen Ausführungsformen der erfindungsgemäßen Magnetvorrichtung schließt sämtliche möglichen Kombinationen von Elektromagneten und Permanentmagneten, insbesondere die Ausbildung des Stator und des Translators als Permanentmagnet oder als Elektromagnet ein.

Der Stator kann als ein Permanentmagnet und der Translator als ein Elektromagnet ausgebildet sein.

Der Stator kann als ein Elektromagnet und der Translator als ein Permanentmagnet ausgebildet sein.

Die Elektromagnete und/oder die Permanentmagnete sind nach dem allgemeinen Fachwissen so zu polen, dass durch die hervorgerufenen Abstoßungskräfte oder Anziehungskräfte eine Bewegung oder eine definierte Position des Translators relativ zum Stator bewirkbar ist.

Bei Ausbildung des Stators und/oder des Translators als Elektromagnet können der Stator und/oder der Translator als weiterer Magnet wirken. Dies kann dadurch erreicht werden, dass das Magnetfeld des Stators und/oder des Translators über einen definierten Zeitraum verändert wird. Der definierte Zeitraum kann in Abhängigkeit der Position des sich bewegenden Translators gewählt werden.

Die erfindungsgemäße Magnetvorrichtung kann eine Steuervorrichtung zur Steuerung der Polung des Elektromagneten und der Steuerung der Stärke des Elektromagneten in Abhängigkeit des Beschleunigungskraftzustandes umfassen.

Die Wirkung einer Beschleunigungseinheit als ein Teil der erfindungsgemäßen Magnetvorrichtung wird anhand der nachstehenden Figuren und der dazugehörenden Figurenbeschreibungen in Ergänzung zu der obigen Beschreibung erläutert.

In den Figuren sind die nachstehenden Elemente durch die folgenden Bezugszeichen gekennzeichnet:

| | |
|---|---|
| 1 | Stator |
| 2 | Translator |
| 3 | Transalatorbewegungsbahn |
| 5 | Beschleunigungseinheit |
| 6 | Fixpunkt |
| 7 | Feder |
| $F_{corr}$ | Korrekturkraft |

Figuren 1 bis 16 betreffen eine Magnetvorrichtung umfassend einen Stator und einen Translator.
Figuren 17 bis 27 betreffen eine Magnetvorrichtung umfassend einen Stator und zwei Translatoren.

Es werden weiters in der folgenden Diskussion einer Bewegung des Translators entgegenwirkende Kräfte wie Reibungskräfte oder Luftwiderstandskräfte aus dem Grund einer vom Fachmann in Bezug auf die gängige Lehre durchzuführenden Vereinfachung nicht berücksichtigt.

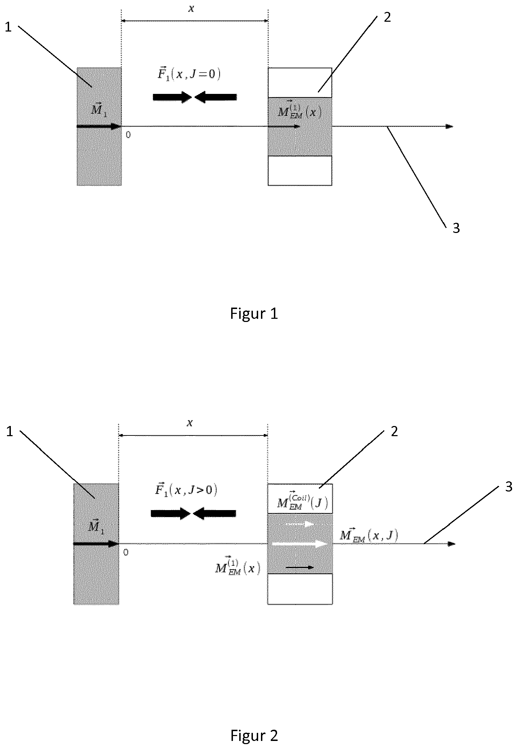

Unter Bezugnahme auf die Figuren 1 bis 16 wird die Interaktion von zwei entlang einer linearen Translatorbewegungsbahn 3 angeordneten magnetischen Dipolen betrachtet. Es ist der erste Dipol 1 als Permanentmagnet, der zweite Dipol 2 als Elektromagnet ausgebildet. Die Diskussion anhand von Figur 1 bis 17 basiert auf der Annahme keiner vorliegenden Relativbewegung zwischen den Dipolen, sodass eine Bezeichnung der Dipole als Stator oder Translator hinfällig ist.

Aus Gründen der Vereinfachung nach der gängigen Lehre wird ein Permanentmagnet mit einer zylindrischen Form und einem sich zumindest entlang der Translatorbewegungsachse erstreckenden Magnetfeldes angenommen. Es wird weiters eine einheitliche Magnetisierung $\vec{M}_1 = M_1 \vec{e_x}$ des Magnetfeldes in Ampere pro Meter [A/m] angenommen.

Das Magnetfeld außerhalb des Permanentmagneten verringert sich mit einem zunehmenden Abstand x vom Magneten. Dies kann durch die folgende Formel ausgedrückt werden:

$$\overrightarrow{H_1}(x) = M_1 \times f(x)\overrightarrow{e_1} \text{ [A/m] mit } f(0) = 1, \ lim_\infty f(x) = 0.$$

Der Elektromagnet umfasst einen zylindrischen ferromagnetischen Kern, um welchen sich ebenso in zylindrischer Form eine Spule erstreckt. Zum Zwecke der Vereinfachung wird eine einheitliche Magnetisierung des ferromagnetischen Kerns angenommen, wenn ein äußeres Magnetfeld $H_{coil}(J)$ [A/m] angewandt wird, sodass die folgende Beziehung gilt:

$\overrightarrow{M_{Core}}(H) = \chi_v \times \overrightarrow{H}$ mit $\chi_v$ als die magnetische Suzeptibilität des ferromagnetischen Kerns. Wenn ein Strom mit einer Stromdichte $J$ durch die Wicklungen des Elektromagneten fließt, entsteht im Inneren der Spule eine einheitliches Magnetfeld $H_{coil}(J)$ als eine Funktion von $J$ [A/mm$^2$] als der Stromdichte innerhalb der Wicklungen der Spule.

Dementsprechend gilt für das Magnetfeld des ferromagnetischen Kerns des Elektromagneten resultierend aus der Stromdichte $J$: $\overrightarrow{M_{EM}^{coil}}(J) = \chi_v H_{coil}(J)\overrightarrow{e_x}$ [A/m]. Daraus folgt eine weiteres Magnetfeld des ferromagnetischen Kerns resultierend aus dem Magnetfeld des Permanentmagneten in einem Abstand $x$ vom ferromagnetischen Kern $\overrightarrow{M_{EM}^{(1)}}(x) = \chi_v \times M_1(x)\overrightarrow{e_x} = \chi_v \times M_1 \times f(x)\overrightarrow{e_x}$ [A/m]. Das Maximum des weiteren Magnetfeldes ist gemäß einschlägiger Lehre bei x = 0: $\overrightarrow{M_{EM}^{(1)}}(0) = \chi_v \times H_1(0) \overrightarrow{e_x} = \chi_v \times M_1\overrightarrow{e_x}.$

Daraus folgt, dass die Stärke des Magnetfeldes des ferromagnetischen Kerns durch die Summe des durch den Permanentmagneten geschaffenen Magnetfeldes in einem Abstand x und des durch die mit der Stromdichte $J$ beaufschlagten Spulte geschaffenen Magnetfeldes:

$$\overrightarrow{M_{EM}}(x,J) = \overrightarrow{M_{EM}^{(1)}}(x) + \overrightarrow{M_{EM}^{coil}}(J) = \chi_v\{H_{coil}(J) + H_1(x)\}\overrightarrow{e_x} = \chi_v\{H_{coil}(J) + M_1 \times f(x)\}\overrightarrow{e_x}.$$

Bei Betrachtung der Interaktionskräfte zwischen dem Permanentmagneten und dem Elektromagneten sind die folgenden zwei prinzipielle Fälle (Fall 1, Fall 2) zu betrachten. Die in den Figuren 2 bis 5 abgeleiteten Magnetisierungen des Permanentmagneten und Elektromagneten leiten sich aus den unten stehenden prinzipiellen Fällen ab.

Fall 1: Der Permanentmagnet und der Kern sind in gleiche Richtungen magnetisiert, sodass gilt

$$\forall x, \forall J, \overrightarrow{M_{EM}}(x,J) = M_{EM}(x,J)\overrightarrow{e_x}, M_{EM}(x,J) > 0$$

$$\forall x, \overrightarrow{M_1}(x) = M_1(x)\overrightarrow{e_x}, M_1(x) > 0,$$

wobei die zueinander orientierten Seiten des Permanentmagneten und der Kern eine unterschiedliche Polarität aufweisen. Die resultierende Kraft ist eine Anziehungskraft, für welche gilt $\overrightarrow{F_1}(x) = F_1(x)\overrightarrow{e_x}$, $F_1(x) < 0$.

Fall 2: Der Permanentmagnet und der Kern sind in unterschiedliche Richtungen magnetisiert, sodass gilt

$$\forall x, \forall J, \overrightarrow{M_{EM}}(x,J) = M_{EM}(x,J)\overrightarrow{e_x}, M_{EM}(x,J) < 0$$

$\forall x, \overrightarrow{M_1}(x) = M_1(x)\overrightarrow{e_x}, M_1(x) > 0$, wobei die zueinander orientierten Seiten des Permanentmagneten und des Kerns eine gleich Polarität aufweisen. Die resultierende Kraft ist eine Abstoßungskraft, für welche gilt $\overrightarrow{F_1}(x) = F_1(x)\overrightarrow{e_x}$, $F_1(x) > 0$.

Eine Anziehungskraft tritt bei einer "positiven" Magnetisierung des Kerns auf, was bedingt $H_{coil}(J) > -H_1(x)$. Bei $J_1$ als die Stromdichte erfüllend $\forall x, H_{coil}(J) = -H_1(x)$ tritt eine Anziehungskraft bei $J > J_1$ auf.

Eine Abstoßungskraft tritt bei einer "negativen" Magnetisierung des Kerns auf, was bedingt $H_{coil}(J) < -H_1(x)$ und $J < J_1$.

Im Falle keiner Beaufschlagung der Spule mit Strom, tritt eine Anziehungsinteraktion auf, da $H_{coil}(0) = 0 > -H_1(x)$ wegen der "positiven" Magnetisierung des Kerns gilt.

Eine Abstoßungsinteraktion tritt auf, wenn das Magnetfeld des Elektromagneten stärker ist als das Magnetfeld des Permanentmagneten und in eine entgegengesetzte Richtung orientiert ist. Dies kann durch die $H_{coil}(J) < -H_1(x)$ und

$J < J_1$ erreicht werden.

Figur 1 veranschaulicht den Fall einer Anziehungsinteraktion zwischen dem Permanentmagneten (erster Dipol 1) und dem Elektromagneten (zweiter Dipol 2). Der Elektromagnet ist mit keinem Strom beaufschlagt. Der Kern ist in einem Anstand x durch das Magnetfeld magnetisiert und wird folglich vom Permanentmagneten angezogen.

Figur 2 veranschaulicht den Fall einer Anziehungsinteraktion zwischen dem Permanentmagneten (erster Dipol 1) und dem Elektromagneten (zweiter Dipol 2), welcher mit einer "positiven" Stromstärke beaufschlagt ist. Eine Beaufschlagung mit einer "positiven" Stromdichte ist in der Weise zu verstehen, als dass die Richtung des Magnetfeldes der Spule und des Magnetfeldes des Permanentmagneten gleich gerichtet sind.

Das Magnetfeld der Spule und des Kern resultieren in einer höheren Magnetisierung des Kerns, wodurch die Anziehungskraft im Allgemeinen größer, mit stärkerer Stromdichte größer werdend ist.

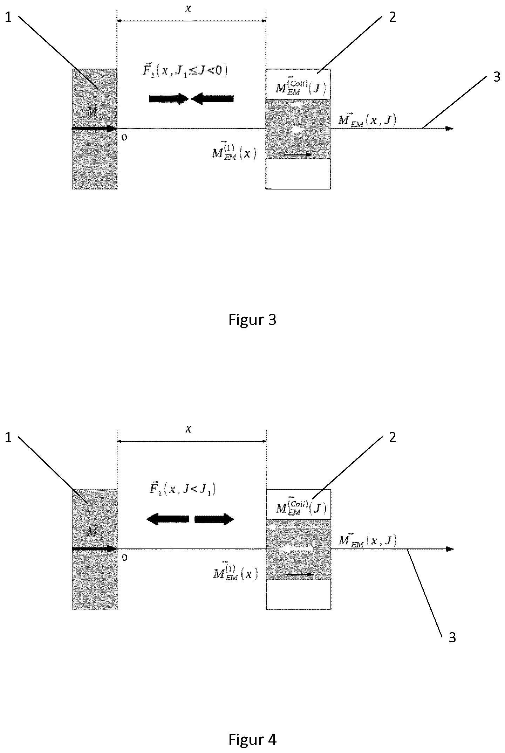

Figur 3 zeigt die Anziehungsinteraktion zwischen dem Permanentmagneten (erster Dipol 1) und dem Elektromagneten (zweiter Dipol) 2 für den Fall einer Beaufschlagung mit einer "negativen" Stromstärke, sodass die Magnetfelder der Spule und das Magnetfeld des Permanentmagneten in entgegengesetzte Richtung gerichtet sind. Bei Erfüllung der Bedingung $-H_1(x) < H_{coil}(J) < 0 \Rightarrow J_1 < J < 0$, ist die Interaktion eine Anziehungsinteraktion.

Figur 4 zeigt den Fall einer Abstoßungsinteraktion zwischen dem Permanentmagnet 1 und dem Elektromagnet 2 bei einer Beaufschlagung mit einer "negativen" Stromdichte, sodass $H_{coil}(J) < -H_{1(x)}$ oder $J < J_1$ gilt. Eine Abstoßungsinteraktion tritt dann auf, wenn die Magnetfeldstärke des Elektromagneten betragsmäßig größer ist als die Magnetfeldstärke des Permanentmagneten und in eine entgegensetzte Richtung orientiert ist.

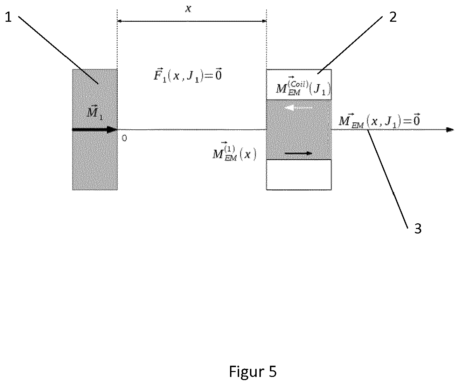

Figur 5 zeigt den Fall des Ausgleiches des Magnetfeldes des Permanentmagneten 1 durch ein durch die Spule geschaffenes Magnetfeld. Dies wird durch die Verwendung einer erfindungsgemäßen Magnetvorrichtung geschaffen. Der besondere Fall zeichnet sich dadurch aus, dass keine Magnetisierung des Kernes des Elektromagneten und daraus resultierend keine aus Interaktionen auftretende Interaktionskraft auftreten. Der entgegen gerichteten Polaritäten des Elektromagneten heben sich einander auf.

Dieser Gleichgewichtszustand ist durch keine Interaktionskraft $\vec{F_1}(x,J) = \vec{0}$ gekennzeichnet, welche erreicht wird bei $H_{coil}(J) = -M_1(x)$ oder $J = J_1$.

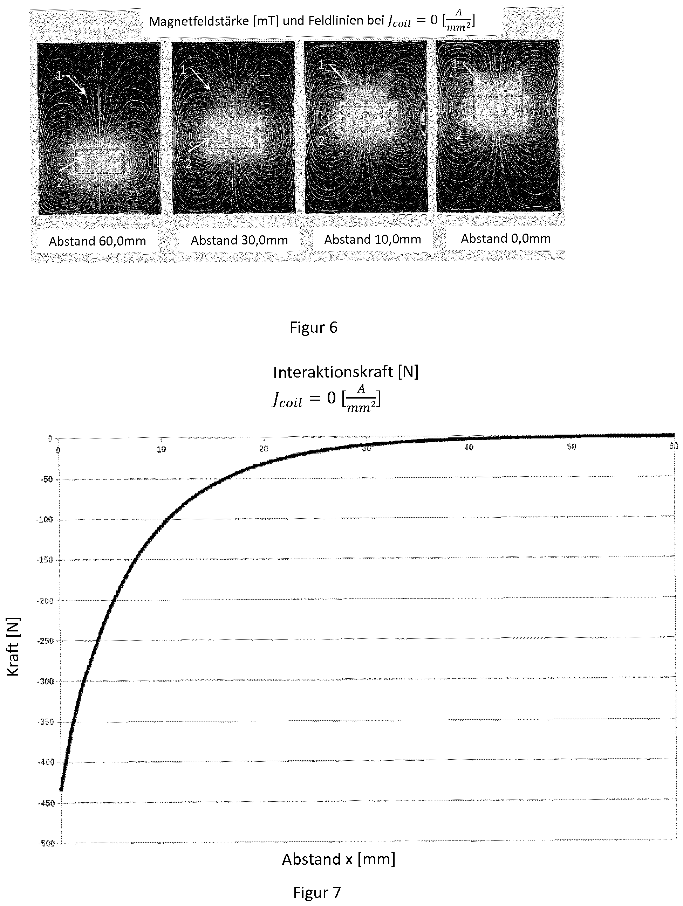

Figur 6 zeigt das Ergebnis einer FEM-Simulation. Es sind in Figur 6 die Magnetfeldstärken ($\|\vec{B}\|$ [$mT$]) und die Magnetfeldlinien für den Fall keiner Beaufschlagung der Spule mit Strom dargestellt. Es wird in Figur 6 eine Beabstandung des Translators in einem Abstand von 60,0mm, 30,0mm, 10,0mm und 0,0mm (Kontakt von Permanentmagnet und Elektromagnet) dargestellt.

Der Permanentmagnet 1 magnetisiert den Kern des Elektromagneten 2, was zu einer Anziehungsinteraktionskraft führt, welche Anziehungsinteraktionskraft umgekehrt proportional zu dem Abstand x ist. Es gilt je größer der Abstand, desto kleiner die Anziehungsinteraktionskraft.

Figur 7 zeigt einen Graphen zu dem in Figur 6 dargestellten Ergebnis der FEM-Simulation. Es ist auf der Abszisse der Abstand x, auf der Ordinate die Kraft angegeben.

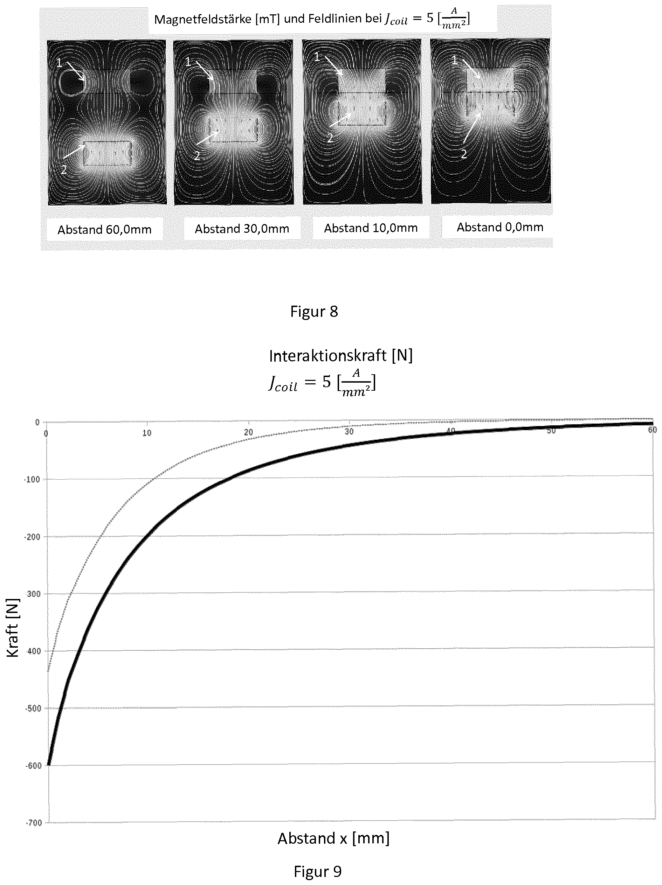

Figur 8 zeigt analog zu Figur 6 das Ergebnis einer FEM-Simulation bei einer Beaufschlagung der Spule mit einer Stromdichte $J_{coil} = 5$ [$A/mm^2$]. Der Permanentmagnet 1 und der Elektromagnet 2 sind gleich gerichtet polarisiert, sodass eine größere Anziehungsinteraktionskraft wirkt.

Figur 9 zeigt analog zu Figur 7 einen zu Figur 8 gehörenden Graphen über die Entwicklung der Interaktionskraft in Abhängigkeit einer Beabstandung von Permanentmagnet und Elektromagnet bei einer zusätzlichen Beaufschlagung $J_{coil} = 5$ [$A/mm^2$]. Figur 9 zeigt somit die Wirkungsweise der Verwendung einer Ausführungsform einer erfindungsgemäßen Magnetvorrichtung. Die Anziehungsinteraktionskraft wird dadurch erhöht (durchgezogene Linie).

Zusätzlich ist die Kraft-Abstand-Linie bei keiner Beaufschlagung durch die gestrichelte Line dargestellt.

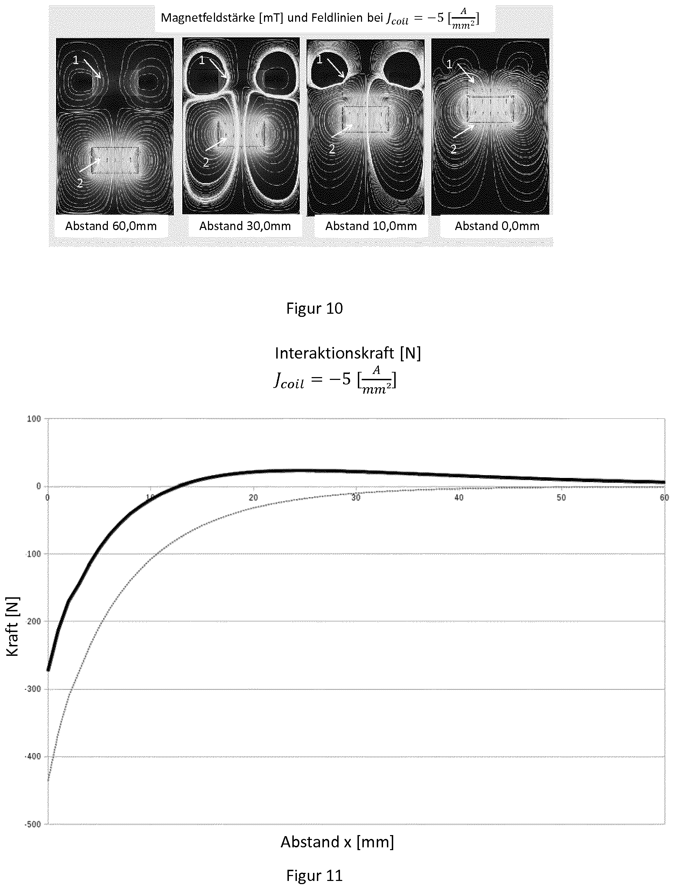

Analog zu Figur 8 und Figur 9 zeigen Figur 10 das Ergebnis einer FEM-Simulation bei einer Beaufschlagung des Elektromagneten mit $J_{coil} = -5$ [$A/mm^2$] und Figur 11 den dazugehörenden Graphen. Es ist in Figur 11 der Verlauf der Interaktionskraft in Abhängigkeit vom Abstand zwischen Permanentmagnet und Elektromagnet bei einer Beaufschlagung des Elektromagneten mit $J_{coil} = -5$ [$A/mm^2$] durch die durchgezogene Linie dargestellt. Die gestrichelte Linie zeigt den Verlauf bei keiner Beaufschlagung des Elektromagneten. Figur 10 und Figur 11 betreffen ebenso die Wirkungsweise einer Ausführungsform einer erfindungsgemäßen Magnetvorrichtung.

Gemäß Figur 11 treten Abstoßungsinteraktionskräfte nur innerhalb eines Abstandes x>14,0mm auf. Das in Figur 10 gezeigte Magnetfeld des Elektromagneten ist folglich nicht ausreichend stark in Bezugnahme auf die durch das Magnetfeld des Permanentmagneten hervorgerufene Anziehungskraft.

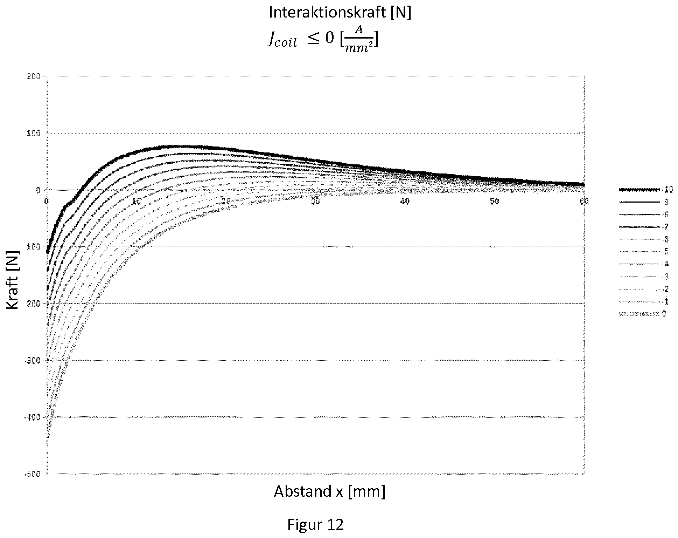

Figur 12 zeigt die Wirkung der Beaufschlagung des Elektromagneten mit einer Stromdichte $J_{coil} \leq 0$ [$A/mm^2$]. Es ist wiederum auf der Abszisse der Abstand zwischen Permanentmagnet und Elektromagnet, auf der Ordinate die zwischen Permanentmagnet und Elektromagnet wirkende Kraft aufgetragen. Aus dem Diagramm Figur 12 erkennt der Fachmann, dass die Herstellung eines vornehmlich durch eine Abstoßungskraft geprägten Zustandes der Magnetvorrichtung eine Beaufschlagung des Elektromagneten 2 bedingt.

Wenn die Bedingung $H_{coil}(J) = -H_1(x)$ nicht erfüllt ist, ist die Interaktionskraft eine Anziehungsinteraktionskraft.

In diesem Fall ist der Translator am Stator gefangen.

Bei einer konstanten Beaufschlagung des Elektromagneten existiert weiters ein Gleichgewichtspunkt $x_{eq}$ bei einer Beabstandung des Permanentmagneten und des Elektromagneten. Der Gleichgewichtspunkt ist definiert durch $H_{coil}(J) = -H_1(x_{eq})$, beispielsweise bei $J_{coil} = -10 [A/mm^2] \rightarrow x_{eq} = 4 [mm]$ und $J_{coil} = -5 [A/mm^2] \rightarrow x_{eq} = 13 [mm]$.

Jener Bereich, in welchem der Fangeffekt auftritt, ist definiert durch $\forall x \in [0, x_{eq}[, F(x, J_{coil}) < 0$. Außerhalb des Bereiches des Fangeffektes ist die Interaktionskraft eine Abstoßungsinteraktionskraft $\forall x > x_{eq}, F(x, J_{coil}) > 0$. Bei einer definierten Stromdichte $J_{coil}$ ist die Gleichgewichtsposition definiert durch $F(x_{eq}, J_{coil}) = 0$.

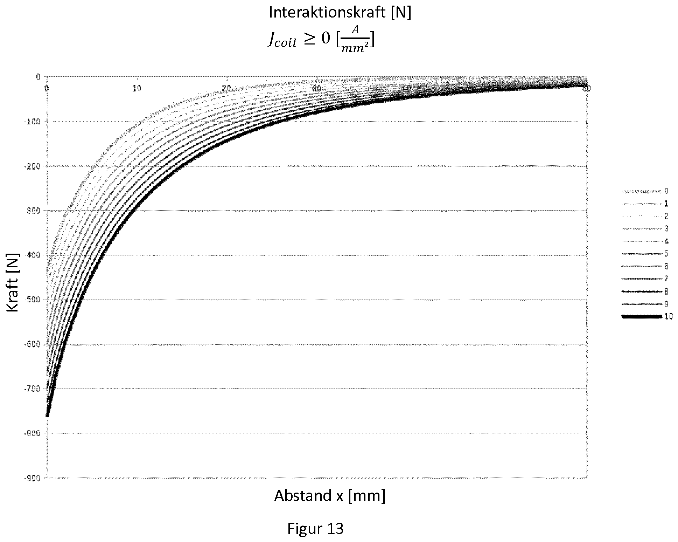

In Ergänzung zu Figur 12 zeigt Figur 13 den Fall einer Beaufschlagung des Elektromagneten mit einer Stromdichte $J_{coil} \geq 0 [A/mm^2]$ innerhalb der Spule.

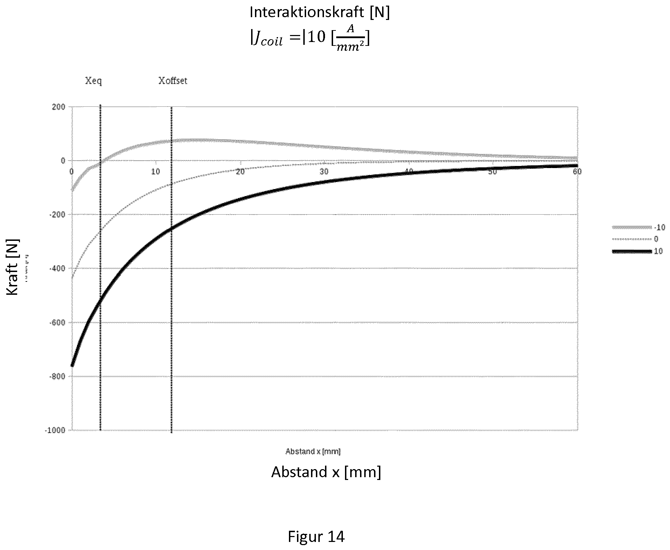

Es wird in Figur 14 weiters die Entwicklung der zwischen dem Permanentmagnet und Elektromagnet wirkende Kraft bei einer Beaufschlagung des Elektromagneten mit $J_{coil} = +10 [A/mm^2]$ und $J_{coil} = -10 [A/mm^2]$ verglichen. Es ist anzumerken, dass die resultierende Stärke der Kraft bei unterschiedlicher Beaufschlagung nicht gleich ist.

Auf Basis obiger Erörterung der Interaktion zwischen einem Permanentmagneten und einem Elektromagneten wird nun die Interaktion für den speziellen Fall einer Oszillation eines Translators relativ zu einem Stator erörtert. Die Oszillation des Translators wird durch ein Schalten der Polarität des Elektromagneten in bestimmten Zeitintervallen bei einer gleich bleibenden elektrischen Energie wie beispielsweise $|J_{coil}| = 10 [A/mm^2]$ erreicht. Die Verzögerungen beim Schalten des Elektromagneten bedingt durch den inneren Widerstand und Induktivität der Spule wird aus Gründen der Vereinfachung des zu diskutierenden Problems im Folgenden nicht weiter beachtet.

Um eine effiziente Oszillation des Translators sicher stellten zu können, muss der Translator außerhalb des Fangbereiches betrieben werden. Letzteres führt zu der Definition eines minimalen Abstandes $\in$ zwischen dem Permanentmagneten und dem Elektromagneten. Dies führt zu $\forall x \geq \in, \vec{F}(x, J_{coil}) = |F(x, J_{coil})|\vec{e}_x$, wobei der Betrieb des Translators außerhalb des Fangbereiches durch die Bedingung $\in \geq x_{eq}$ gewährleistet ist.

Für einen Betrieb außerhalb des Fangbereiches muss beachtet werden, dass das Feldkraftprofil bei konstanter elektrischer Energie $|J_{coil}| = Cte [A/mm^2]$ asymmetrisch ist. Die Interaktionsanziehungskraft ist betragsmäßig höher als die Abstoßungsinteraktionskraft. Daraus folgt, dass der minimale Abstand $\in$ die maximal aktivierbare Anziehungskraft verringert.

$$\in = x_{eq} \rightarrow |F_{max}(0,10)| = 500 [N]$$

$$\in = x_{offset} \rightarrow |F_{max}(0,10)| = 200 [N],$$

wobei die Positionen $x_{eq}$ und $x_{offset}$ Funktionen der Stromdichte innerhalb der Spule $J_{coil}$ sind und aus diesem Grund

$$\tau_{coil} = \frac{L_{coil}}{R_{coil}}.$$

von einem inneren Zeitfaktor der Spule abhängen

Die Asymmetrie des Feldkraftprofils wird durch die benötigte zusätzliche Energie erklärt, welche zur Entgegenwirkung gegen das Magnetfeld aufgewandt werden muss. In der oben angeführten Erörterung über die Interaktion zwischen einem Permanentmagneten und einem Elektromagneten wurde diese zusätzliche Energie durch die Spule des Elektromagneten aufgebracht, wobei die Spule mit einer höheren Stromdichte beaufschlagt wurde. Zur Sicherstellung der Abstoßungsinteraktionskraft musste die folgende Bedingung erfüllt werden: $H_{coil}(J) < -H_1(x)$.

Der Gleichgewichtspunkt gleichsam zum Grenzpunkt des Fangbereiches ist definiert durch $H_{coil}(J) = -H_1(x_{eq})$.

Im Falle einer Oszillation eines Translators relativ zu einem Stator kann eine mechanische Beschleunigungseinheit vorteilhaft sein, welche einen ähnlichen Effekt in Bezugnahme auf den auf den Translator wirkenden Kraftzustand wie die oben erörterte Beaufschlagung der Spule mit einer zusätzlichen Stromdichte aufweist. Es ist hierbei Aufgabe der Beschleunigungseinheit einen Beschleunigungskraftzustand auf den Translator aufzubringen, welcher der Anziehungskraft des Permanentmagneten auf den Translator entgegenwirkt, insbesondere im Falle eines Nichtbetriebes des Elektromagneten.

Der Kraftzustand als Summe der auf den Translator wirkenden magnetischen Interaktionskraft und des Beschleunigungskraftzustandes soll bei Anwendung der erfindungsgemäßen Vorrichtung an jeder beliebigen Position Null sein. Der Kraftzustand $\vec{F}_{TOT}(x, J)$ wirkend auf den in einer Position x befindlichen Translator unter Beaufschlagung der Spule mit einer Stromdichte $J$ wird durch den folgenden Ausdruck ausgedrückt:

$\forall x \geq 0, \vec{F}_{TOT}(x, J) = \vec{F}(x, J) + \vec{F}_{corr}(x)$, wobei $\vec{F}_{corr}(x)$ ist der durch die Beschleunigungseinheit aktivierte Beschleunigungskraftzustand umfassend die Korrekturkraft $\vec{F}_{corr}(x)$ und $\vec{F}(x, J)$ ist die Interaktionskraft wirkend zwischen Stator und Translator. Die erforderliche mechanische Wirkung resultiert aus der Gleichgewichtsbedingung für den Translator $\forall x \geq 0$,

$\overrightarrow{F_{TOT}}(x, 0) = \vec{0} \rightarrow \overrightarrow{F_{corr}}(x) = -\vec{F}(x,0)$, woraus die unten stehende Charakterisierung der Beschleunigungseinheit folgt $\forall x \geq 0, \overrightarrow{F_{corr}}(x) = -\vec{F}(x,0)$, sodass der Beschleunigungskraftzustand beziehungsweise die Korrekturkraft der auf den Translator wirkenden Anziehungskraft des Stators bei keinem Betrieb des Elektromagneten entgegenwirkt, sodass die Summe der wirkenden Kräfte eines Kraftzustandes Null ist. Hieraus folgt

$$\forall x \geq 0, \overrightarrow{F_{TOT}}(x,0) = \vec{0}$$

$$\forall x \geq 0, \forall J, \overrightarrow{F_{TOT}}(x,J) = \{F(x,J) - F(x,0)\}\vec{e_x}.$$

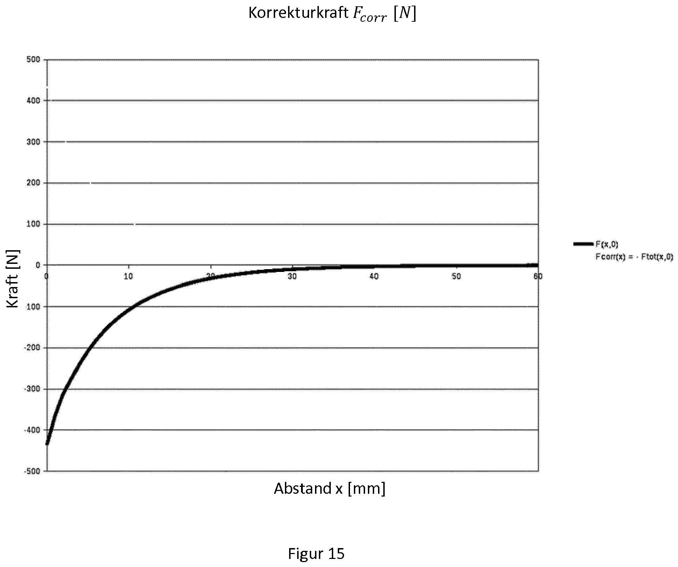

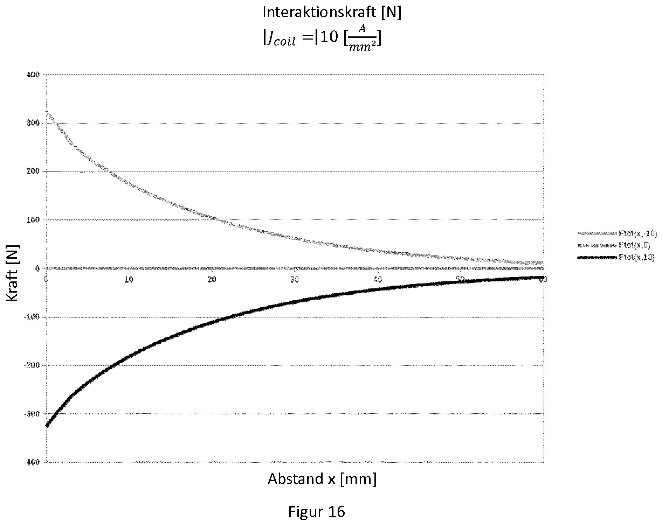

Figur 15 zeigt den Verlauf der Korrekturkraft in Abhängigkeit einer auf der x-Achse aufgetragenen Beabstandung des Translators vom Stator. Figur 16 zeigt den Verlauf der auf den Translator wirkenden Kräfte in Abhängigkeit der Beabstandung des Translators zum Stator bei drei unterschiedlichen Fällen einer Beaufschlagung der Spule des Elektromagneten mit einer Stromdichte, nämlich $J_{coil}$ = +10 [$A/mm^2$], $J_{coil}$ = -10 [$A/mm^2$] und $J_{coil}$ = 0 [$A/mm^2$]. Die Summe der auf den Translator wirkenden Kräfte ist durch $\forall x \geq 0$, $\forall J$, $\overrightarrow{F_{TOT}}(x,J) = \{F(x,J) - F(x, 0)\}\vec{e_x}$ definiert, wobei das Gleichgewicht sich bei $\forall x \geq 0$, $\overrightarrow{F_{TOT}}(x, 0) = \vec{0}$ einstellt. Weiters tritt eine Abstoßungsinteraktionskraft auf, wenn die Bedingung $H_{coil}$ < 0 → $J_{coil}$ < 0 erfüllt ist. Im umgekehrten Fall tritt eine Anziehungsinteraktionskraft auf, wenn die Bedingung $H_{coil}$ > 0 → $J_{coil}$ > 0 erfüllt ist. Der Verlauf der Kräfte ist im Wesentlichen zu der x-Achse des Diagramms symmetrisch. Die Beträge der Abstoßungsinteraktionskraft und der Anziehungsinteraktionskraft sind im Wesentlichen gleich, da diese durch die Stromdichte innerhalt der Spule des Elektromagneten definiert sind.

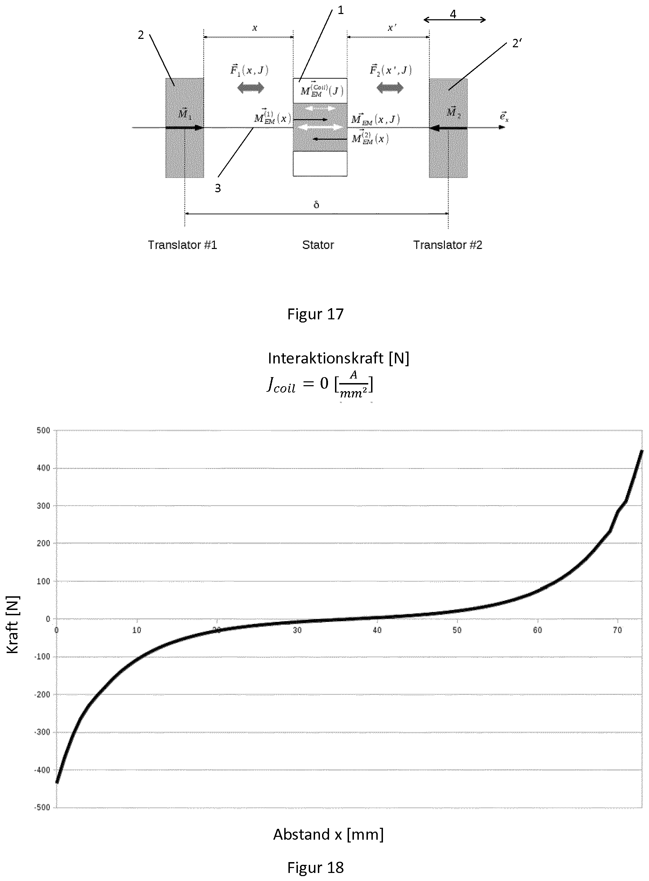

Oben angeführte Erörterungen werden im Folgenden auf eine Magnetvorrichtung umfassend n+1 Translatoren (n=1,2,3,...) und n Statoren angewandt. Figur 17 zeigt eine prinzipielle Anordnung von einem Statoren und zwei Translatoren entlang einer Achse, welche der Bewegungsachse des Translators entspricht.

Im Folgenden wird eine Magnetvorrichtung mit einem Stator und zwei Translatoren betrachtet. Es sind der Stator 1 Elektromagnet umfassend einen Kern und eine Spule, die Translatoren 2, 2' als Permanentmagneten ausgebildet.

Gemäß Abbildung in Figur 17 wird der Abstand zwischen der dem Stator 1 zugewandten Oberfläche des ersten Translators 2 und der dem ersten Translator 2 zugewandten Oberfläche des Stators 1 mit x angegeben, während x' den Abstand zwischen der dem Stator 1 zugewandten Oberfläche des zweiten Translators 2' und der dem zweiten Translator 2' zugewandten Oberfläche des Stator 1 bezeichnet. $\delta$ kennzeichnet den Abstand zwischen dem Kern des ersten Translators 2 und den Kern des zweiten Translators 2', wobei $d$ für die Länge der Translatorbewegungsbahn 3 steht, sodass gilt:

$$\forall x \in [0, d], \forall x' \in [0, d], \delta = Cte$$

$$x \in [0, d]$$

$$x' = d - x \rightarrow x' \epsilon [0, d]$$

Der Kern des Elektromagneten als Teil des Stators 1 wird durch drei Magnetfelder magnetisiert, nämlich durch das durch den ersten Translator 2 geschaffene Magnetfeld, welcher erster Translator 2 im Abstand x vom Stator entfernt ist.

$$\overrightarrow{M_{EM}^1}(x) = \chi_v \overrightarrow{H_{EM}^{(1)}}, \text{ wobei } \overrightarrow{H_{EM}^{(1)}} = M_1 \times f(x)\vec{e_x}.$$

Das zweite Magnetfeld des zweiten Translators 2' im Abstand x' zum Stator 1 kann durch den Ausdruck

$$\overrightarrow{H_{EM}^{(2)}}(x') = -M_2 \times f(x')\vec{e_x}$$

beschrieben werden, wobei unter Verwendung von

$$x' = d - x$$

$$\overrightarrow{M_{em}^{(2)}}(x') = \chi_v \overrightarrow{H_{EM}^{(2)}}(d - x) = -\chi_v M_2 f(d - x)\overrightarrow{e_x} \text{ gilt.}$$

Das dritte Magnetfeld ist das durch die Spule des Elektromagneten erzeugte Magnetfeld

$$\overrightarrow{M_{EM}^{(coil)}}(J) = \chi_v H_{coil}(J)\overrightarrow{e_x},$$ wobei die Richtung des Strom die Richtung des Magnetfeldes definiert $J > 0 \rightarrow I > 0 \rightarrow H_{coil}(J) > 0$.

Die Magnetisierung des Kernes des Elektromagneten läßt sich zusammenfassend als $\overrightarrow{M_{EM}}(x,J) = \chi_v\{M_1 f(x) - M_2 f(d - x) + H_{coil}(J)\}\overrightarrow{e_x}$ darstellen, wobei $f(x)$ ein zum Abstand x invers proportionale Funktion ist mit $f(0) = 1$, $lim_\infty f(x) = 0$.

$\overrightarrow{F_1}(x,J)$ sei im Weitern der Interaktionskraftzustand zwischen dem Stator 1 und dem ersten Translator 2, $\overrightarrow{F_2}(x,J)$ der Interaktionskraftzustand zwischen dem Stator 1 und dem zweiten Translator 2', sodass für den auf den Stator 1 wirkenden Kraftzustand $\overrightarrow{F_{EM}}(x,J) = \overrightarrow{F_1}(x,J) + \overrightarrow{F_2}(x,J)$ gilt.

Der Term $x \in [0, d]$ steht für die Verschiebung der Translatoren 2, 2' entlang der axialen Translatorbewegungsbahn 3, wobei eine Bewegung von links nach rechts als eine Bewegung in eine "positive" Richtung von der Anfangsposition $x = d$ beziehungsweise $x' = 0$ zu einer Endposition $x = 0$ beziehungsweise $x' = d$ behandelt wird. Eine Bewegung von rechts nach links wird als eine "negative" Bewegung von der Anfangsposition $x = 0$ beziehungsweise $x' = d$ zu einer Endposition $x = d$ beziehungsweise $x' = 0$ betrachtet.

Wenn $\overrightarrow{M_{EM}}(x,J) = M_{EM}(x,J)\overrightarrow{e_x}$ mit $M_{EM}(x,J) > 0$ gilt:
Der erste Translator 2 und der Stator 1 sind in Figur 17 in die gleiche Richtung polarisiert, sodass die Interaktionskraft eine Anziehungskraft ist und $F_1(x,J) > 0$ gilt. Dies gilt im Falle von $H_{coil}(J) > -M_1 f(x)$ unter der Einhaltung von $max(f(d - x))$ mit $H_{coil}(J) > -M_1$.

Der zweite Translator 2' und der Stator 1 sind in unterschiedliche Richtungen polarisiert, sodass die Interaktionskraft eine Abstoßungskraft ist. Dies wird erreicht, wenn $H_{coil}(J) > M_2 f(d - x)$ und $max(f(d - x)) = 1$, wenn $\forall x \in [0, d]$, $H_{coil}(J) > M_2$.

Eine Bewegung von links nach rechts wird erreicht, wenn $\forall x \in [0, d]$, $H_{coil}(J) > M_2 > 0 > -M_1$ in einer "positiven" Magnetisierung des Stators resultieren.

Der Fangeffekt tritt auf, wenn $M_2 > H_{coil}(J) > -M_1$. Der Stator 1 ist durch das Magnetfeld des zweiten Translators 2' oder umgekehrt gefangen.

Wenn $\overrightarrow{M_{EM}}(x,J) = M_{EM}(x,J)\overrightarrow{e_x}$ mit $M_{EM}(x,J) < 0$, sind der erste Translator 2 und der Stator 1 in entgegengesetzte Richtungen polarisiert, sodass die Interaktionskraft eine Abstoßungskraft ist und $F_1(x,J) < 0$ gilt. Dies wird erreicht, wenn $F_1(x,J) < 0$ gilt, sodass $\forall x \in [0,d]$, $F_1(x,J) < 0$, wenn $\forall x \in [0,d]$, $H_{coil}(J) < -M_1$. Der zweite Translator 2' und der Stator 1 sind in gleiche Richtungen polarisiert, sodass die Interaktionskraft eine Anziehungskraft ist und $F_2(x,J) < 0$ gilt. Dies wird erreicht, wenn $H_{coil}(J) < M_2 f(x - d)$, sodass $\forall x \in [0, d]$, $F_2(x,J) < 0$, wenn $\forall x \in [0, d]$, $H_{coil}(J) < M_2$.

$M_1$ und $M_2$ sind positiv, sodass eine Bewegung von rechts nach links der Translatoren 2, 2' abgeleitet werden kann, wenn durch $\forall x \in [0, d]$, $H_{coil}(J) < -M_1 < 0 < M_2$ eine "negative" Polarisierung des Stators 1 ausgedrückt ist.

Das Fangproblem tritt auf, wenn $-M_1 < H_{coil}(J) < M_2$, sodass der Stator 1 durch das Magnetfeld des ersten Translators 2 gefangen ist.

Bei gleichen Magnetfeldstärken $M_1 = M_2 = M$ wird eine "positive" Polarisierung und eine Bewegung von links nach rechts erreicht, wenn $\forall x \in [0,d]$ und $H_{coil}(J) > M$. Umgekehrt hierzu wird eine "negative" Polarisierung und eine Bewegung von rechts nach links erreicht, wenn $\forall x \in [0, d]$ und $H_{coil}(J) < -M$. Der Fangeffekt tritt auf bei $H_{coil}(J) \in [-M,M]$; der Fangeffekt kann unterbunden werden, wenn $|H_{coil}(J)| > M$ sicher gestellt ist.

Das System ist im Gleichgewicht, wenn

$$M_{EM}(x,J) = 0 \rightarrow \chi_v\{M_1 f(x) - M_2 f(d - x) + H_{coil}(J)\} = 0$$
$$\rightarrow H_{coil}(J) = M_1 f(x) - M_2 f(d - x).$$

Unter der Annahme der gleichen Magnetisierung der Magnete $M_1 = M_2 = M$ ist der Translator im Gleichgewicht, wenn $H_{coil}(J) = M\{f(x) - f(d - x)\}$.

Das System hat ein inneres Gleichgewicht bei einem nicht mit Strom beaufschlagten Elektromagneten, wenn

$H_{coil}(J) = 0 \rightarrow M\{f(x) - f(d - x)\} = 0 \rightarrow f(x) = f(d - x)$, was einerseits bei $x = \frac{d}{2}$ erreicht ist. Dies ist der Fall wenn der erste Translator und der zweite Translator eine gleiche Magnetisierung aufweisen und in einer gleichen Distanz vom Stator entfernt sind.

Bei Verwendung von Translatoren mit unterschiedlicher Feldstärke verschiebt sich der Gleichgewichtspunkt vom stärken Translator weg, um $M_1 f(x_{eq}) = M_2 f(d - x_{eq})$ zu erfüllen.

In Figur 18 bis Figur 24 ist das Ergebnis einer Simulation mittels FEM dargestellt. Die Simulation basiert auf den folgenden Annahmen:

Der Stator 1 wird als Elektromagnet mit einem ferromagnetischen Kern aus Weichmetall und einem Durchmesser von 30,0mm und einer Länge von 30,0mm (zylindrische Form) betrachtet. Die Spule wird durch eine Stromdichte $J_{coil}[A/mm^2]$ und einem Körper aus Kupfer mit einer Querschnittsfläche von 30,0 x 30,0mm$^2$ angenommen.

Die Translatoren 2, 2' sind als Permanentmagnete in zylindrischer Form mit einem Radius von 30,0mm und einer Länge von 30,0mm angenommen, wobei die Permanentmagnete in Richtung der Achse des Zylinders eine Magnetisierung aufweisen. Es wird ein Magnetisierungswert von $M_1 = M_2 = 10E5[A/m]$ angenommen, was einem handelsüblichen N45° Permanentmagneten entspricht. Die Translatoren 2, 2' können sich entlang der linearen Translatorbewegungsbahn 3, die auch Systemachse ist, frei bewegen. Die relative Position der Translatoren 2, 2' wird durch die Variable $x \in [0, d][mm]$ beschrieben.

In Figur 18 bis Figur 24 ist die Interaktionskraft für eine Position der Translatoren $x \in [0,73][mm]$ und einer Beaufschlagung des Stators mit $J_{coil} \in [-10,10][A/mm^2]$ in Abhängigkeit der Position der Translatoren dargestellt.

Figur 18 zeigt den Fall einer Beaufschlagung des Elektromagneten mit $J_{coil} = 0 [A/mm^2]$ für einen Bereich der Position des Translators $x \in [0,73mm]$. In Einklang mit obiger Erörterung liegt der Gleichgewichtspunkt $F_{EM}(x_{eq},0) = 0$ in der Mitte der Translatorbewegung $x_{eq} = \frac{d}{2}$.

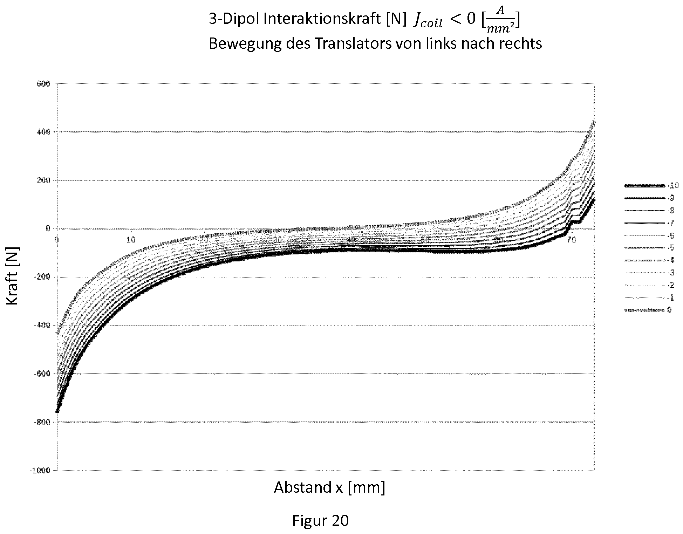

Figur 20 zeigt die Entwicklung der Interaktionskraft bei einer Beaufschlagung des als Elektromagnet ausgebildeten Stators mit $J_{coil} \in [-10,0][A/mm^2]$ in einem Bereich des Translators $x \in [0,73] [mm]$. Die Beaufschlagung des Stators führt zu einer positiven Magnetisierung dieses. Der Stator und der erste Translator unterliegen einer Anziehkraft; der Stator und der zweite Translator einer Abstoßungsinteraktionskraft. Die Bedingung für eine Abstoßungsinteraktion zwischen dem Stator und dem zweiten Translator $|H_{coil}(J)| > M_2$ ist nicht erfüllt, wenn der Stator nahe dem zweiten Translator ist.

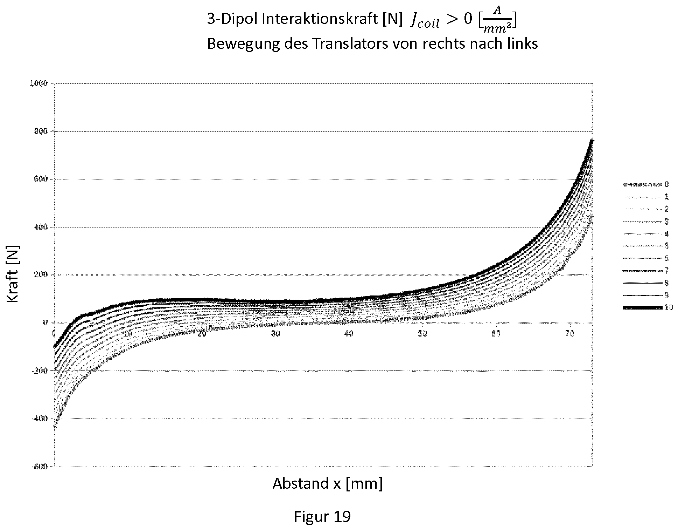

Figur 19 zeigt die Entwicklung der Interaktionskraft bei einer Beaufschlagung des Stators mit $J_{coil} \in [0, +10][A/mm^2]$ in Abhängigkeit der Position des Stators in einem Bereich $x \in [0,73][mm]$. Dies führt zu einer negativen Magnetisierung des Stators; der Stator und der zweiten Translator stehen unter dem Einfluss einer Anziehungsinteraktionskraft, während zwischen dem Stator und dem ersten Translator eine Abstoßungsinteraktionskraft wirkt.

Die Bedingung für eine Abstoßungsinteraktionskraft zwischen dem Stator und dem ersten Translator ist nicht erfüllt, wenn der Stator nahe dem ersten Translator ist.

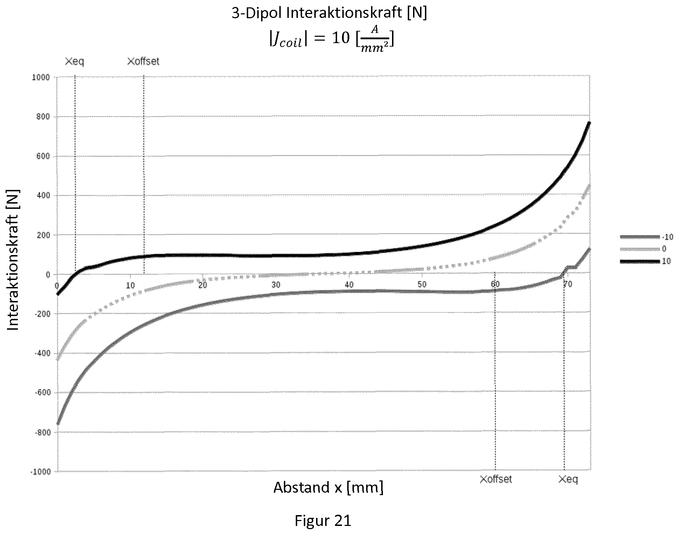

Figur 21 vergleicht den Fall einer Beaufschlagung des als Elektromagnet ausgebildeten Stators 1 mit $J_{coil} = 10 [A/mm^2]$ und den Fall einer Beaufschlagung mit $J_{coil} = -10 [A/mm^2]$ in Abhängigkeit der Position des ersten Translators 2, für einen Bereich $x \in [0,73][mm]$.

In dem Bereich (im Folgenden als "Fangbereich" bezeichnet), in welchem die Bedingung $\forall x \in [0,d], |H_{coil}(J)| > M$ nicht erfüllt ist und in welchem der Fangeffekt auftritt, wirkt die Interaktionskraft gegen eine gewünschte Bewegung der Translatoren 2, 2'. Der Endpunkt des Fangbereiches ist durch den Gleichgewichtspunkt $x_{eq}$ definiert.

Der Fangbereich entspricht im Wesentlichen derjenigen Position des Stators, in welcher das Magnetfeld des Stators nicht das Magnetfeld des näheren Translators der Translatoren 2, 2' ausgleicht.

Der Fachmann erkennt, dass - um eine effiziente Oszillation der Translatoren zu erhalten - die Bewegung des Translators 2, 2' sich außerhalb des Fangbereiches erstrecken sollte. Daraus folgt eine erforderliche Mindestdistanz $\in \geq x_{eq}$ zwischen dem ersten Translator und dem Stator.

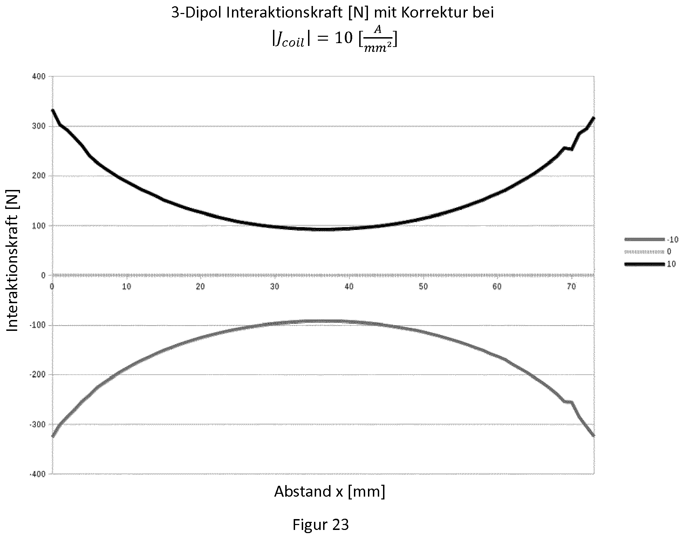

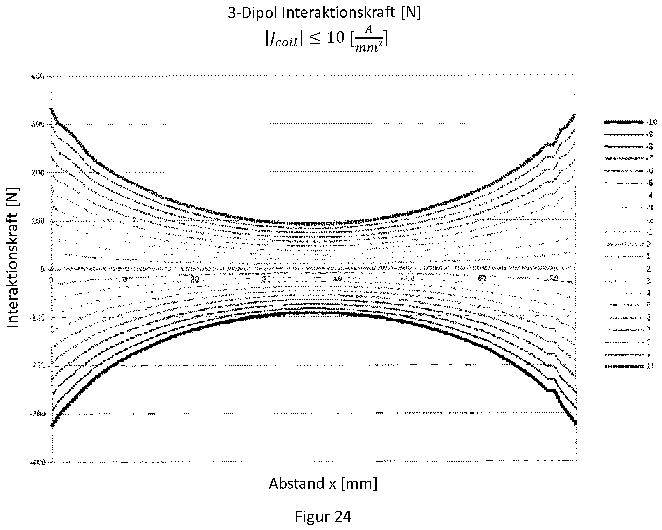

Figuren 23 und 24 betreffen die Verwendung einer Beschleunigungseinheit.

In obiger Betrachtung wurde der durch die Beschleunigungseinheit aktivierte Beschleunigungskraftzustand, insbesondere die Korrekturkraft durch den Term $\overrightarrow{F_{corr}}(x)$ in Abhängigkeit der Beabstandung des ersten Translators 2 zum Stator 1 definiert, sodass der auf den ersten Translator 1 wirkende Kraftzustand sich durch die Gleichung $\overrightarrow{F_{TOT}}(J) = \vec{F}(x,J) + \overrightarrow{F_{corr}}(x)$ errechnet.

Es wurde als zweites Charakteristikum der Beschleunigungseinheit das Vorliegen eines Gleichgewichtszustandes gewählt, welcher bei einem Nicht-Betrieb des Elektromagneten vorliegen soll: $\overrightarrow{F_{TOT}}(x,0) \rightarrow \overrightarrow{F_{corr}}(x) = -\vec{F}(x,0)$.

Der durch die Beschleunigungseinheit hervorgerufene Beschleunigungskraftzustand umfassend $\overrightarrow{F_{corr}}$ stimmt im Wesentlichen mit dem Fangkraftzustand überein, welcher erfindungsgemäß durch den Beschleunigungskraftzustand in zumindest Teilbereichen zu überlagern ist. Der Beschleunigungskraftzustand, insbesondere der Verlauf dieses kann durch Messungen gegebenenfalls bei einem Nichtbetrieb des Elektromagneten abgeleitet werden.

Figur 23 vergleicht den Verlauf des Beschleunigungskraftzustandes gewährleistend $\overrightarrow{F_{corr}}(x) = -F(x,0)$. Zusätzlich ist die Interaktionskraft als gestrichelte Linie eingetragen für den Fall, dass der als Elektroantrieb ausgebildete Stator nicht aktiv ist.

Figur 24 zeigt den Verlauf von $F_{TOT}(x,J)$ bei Verwendung einer Beschleunigungseinheit und bei Beaufschlagung des Stators mit einer "positiven" oder "negativen" Stromdichte $|J_{coil}| = 10[A/mm^2]$ als eine Funktion der Position der Beanstandung der Translatoren vom Stator. In dem Diagramm wird der Bereich $x \in [0,73][mm]$ betrachtet. Zusätzlich ist mittels der punktierten Linie der Verlauf von $F_{TOT}(x,J)$ bei keiner Beaufschlagung des Stators angegeben.

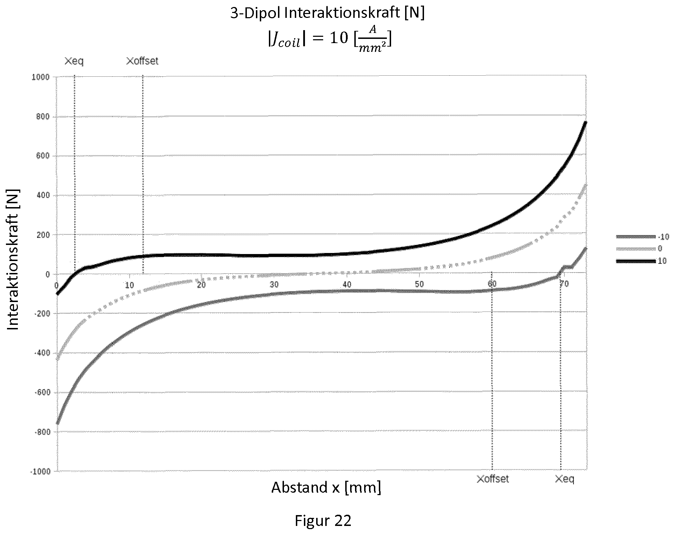

Der in Figur 21 und 22 dargestellte Kraftverlauf basiert auf der Vereinfachung, dass der erste Translator und der zweite Translator die gleiche Magnetisierung aufweisen. Daraus ergibt sich eine Gleichgewichtsposition bei

$$x_{eq} = \frac{d}{2}.$$ für einen unbeaufschlagten Elektromagneten $$F_{TOT}\left(\frac{d}{2}, 0\right) = 0.$$

Der in Figur 23 gezeigte Kraftzustand bei Verwendung einer Beschleunigungseinheit weist folgenden Charakteristika auf:

Der nicht beaufschlagte Translator ist immer im Gleichgewicht: $\forall x \in [0, d], F_{TOT}(x, 0) = 0$. Die zuvor erwähnte Gleichgewichtsposition $x_{eq} = \frac{d}{2}$ wird zum Symmetriepunkt des Verlaufes der korrigierten Interaktionskraft $F_{TOT}(x,J)$. Das Profil des Verlaufes der korrigierten Interaktionskraft ist u-förmig.

Figur 24 zeigt den Verlauf der korrigierten Interaktionskraft $F_{TOT}(x,J)$ bei unterschiedlicher Beaufschlagung des Elektromagneten mit $J_{coil} \in [-10,10][A/mm^2]$ in Abhängigkeit der relativen Position des Translators für einen Bereich $x \in [0,73][mm]$.

Eine optimale Bewegung des Translators von links nach rechts ist durch $F_{TOT}(x,J) > 0$ gekennzeichnet. Dies wird erreicht bei $J > 0$. Umgekehrt wird eine Bewegung des Translators von rechts nach links durch $F_{TOT}(x,J) < 0$ bei $J > 0$ erreicht.

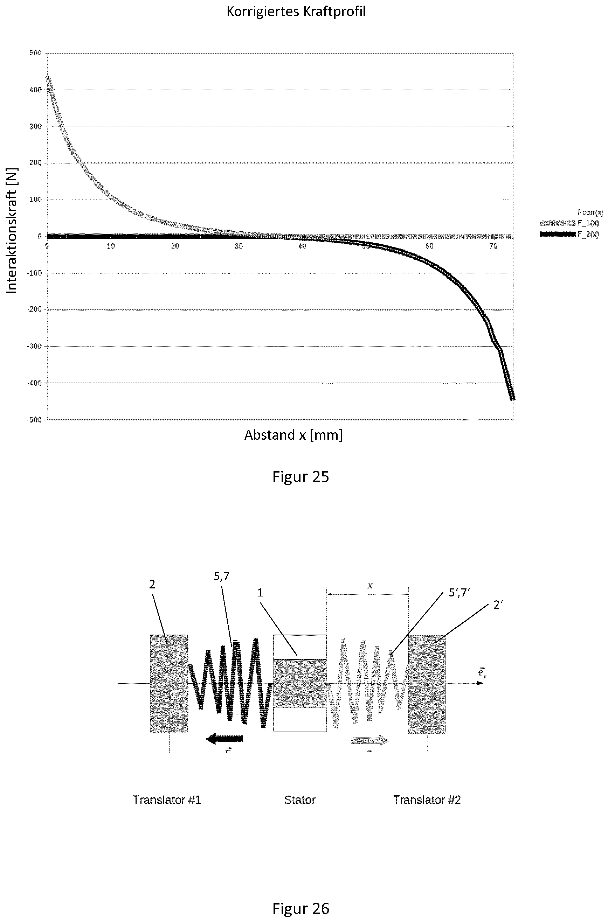

Figuren 25 bis 27 beschäftigen sich mit einer speziellen Ausführungsform der Beschleunigungseinheit, nämlich in Form einer Feder. Die Wirkungsweise der Feder wird in Anlehnung an die oben beschriebenen Charakteristika der Beschleunigungseinheit erörtert.

Da $x_{eq} = \frac{d}{2}$ der Symmetriepunkt des Verlaufes der korrigierten Kraft ist, kann die Korrekturkraft unter Berücksichtigung der mechanischen Eigenschaften einer Feder als eine Summe von zwei Federkräften ausgedrückt werden:

$$\forall x \in [0,d], F_{corr}(x) = F_1(x) + F_2(x) \qquad \text{mit} \qquad \forall x \in [0,\tfrac{d}{2}[, F_1(x) > 0, F_2(x) = 0$$

und

$$\forall x \in ]\tfrac{d}{2}, d], F_1(x) = 0, F_2(x) < 0.$$

Figur 25 zeigt den Verlauf von $\forall x \in [0,d], F_{corr}(x) = F_1(x) + F_2(x)$. Es gilt hierbei $\forall x \in [0, d], F_1(x) \geq 0$ immer bewirkend eine "positive" Kraft und $\forall x \in [0,d], F_2(x) \leq 0$ immer bewirkend eine "negative" Kraft. Die erste Federkraft $F_1$

wirkt ausschließlich im Bereich $x \in [0, \tfrac{d}{2}[,$ sodass die erste Federkraft der Interaktion zwischen Stator und erstem Translator entgegenwirkt. Die zweite Federkraft $F_2$ wirkt hierzu analog ausschließlich im Bereich $x \in ]\tfrac{d}{2}, d]$ und entgegen der Interaktion zwischen Stator und dem zweiten Translator.

Bei einer gleichen Magnetisierung des ersten Translators und des zweiten Translator können die erste Federkraft und die zweite Federkraft wie folgt spezifiziert werden. Die erste Federkraft und die zweite Federkraft sind betragsmäßig gleich und wirken in unterschiedliche Richtungen:

$$\forall x \in [0, d], F_2(x) = -F_1(d - x).$$

Obige Erörterung führt zu der Anordnung von einer ersten Feder und einer zweiten Feder, die gleiche Federeigenschaften aufweisen, jedoch in unterschiedliche Richtungen wirken. Figur 26 zeigt eine mögliche Ausführungsform der erfindungsgemäßen Magnetvorrichtung bei Verwendung von Federn 7, 7' als Beschleunigungseinheit 5, 5'.

Die erste Feder 7 erstreckt zwischen dem Stator 1 und dem ersten Translator 2 jeweils auf die zugewandten Oberflächen wirkend. Die erste Feder 7 wirkt einem Fangeffekt zwischen dem Stator 1 und dem ersten Translator 2 entgegen. Die Vorspannung der ersten Feder 7 erfolgt in Abhängigkeit einer Annäherung des ersten Translators 2 an den Stator 1. Der Stator 1 wirkt als Fixpunkt 6 für die erste Feder 7. Gleichsam wird die erste Federkraft $F_1$ in Abhängigkeit einer Beabstandung des ersten Translator 2 vom Stator 1 als eine "positive" Kraft abgegeben.

Die zweite Feder 7' wirkt analog zu der ersten Feder 7. In Analogie zu der Anordnung der ersten Feder 7 ist die zweite Feder 7' zwischen dem Stator 1 und dem zweiten Translator 2' angeordnet. Der Stator 1 wirkt als Fixpunkt 6 für die zweite Feder 7'.

Es gilt für die durch die erste Feder 7 und die zweite Feder 7' hergestellte Korrekturkraft $F_{corr}(x) = F_1(x) + F_2(x) = -F(x,0)$.

Gemäß dem einschlägigen Stand der Lehre ist eine Federkraft proportional zu der Längenänderung der Feder. Im Falle einer Kompression $\delta x[mm]$ der Feder gilt $F = -k\delta x$, wobei $k$ [$N/mm$] die Federkonstante darstellt.

Bei Teilung der Translatorbewegung in n (n=1,2,3..) Subintervalle $[x_{n-1}, x_n]$ mit $x_0 = 0$ und $x_n = d$ kann die Federkraft durch eine linear Extrapolation dargestellt werden.

$$F(x) = \alpha_n \times x + \beta_n \text{ mit } \alpha_n = \frac{F(x_n) - F(x_{n-1})}{x_n - x_{n-1}} \text{ und} \beta_n = F(x_{n-1}).$$

Unter Berücksichtigung der Kompressionslänge $\delta_n = x_n - x_{n-1}$ und der Federkonstante

$$k_n = \left| \frac{F(x_n) - F(x_{n-1})}{x_n - x_{n-1}} \right| [N/m],$$

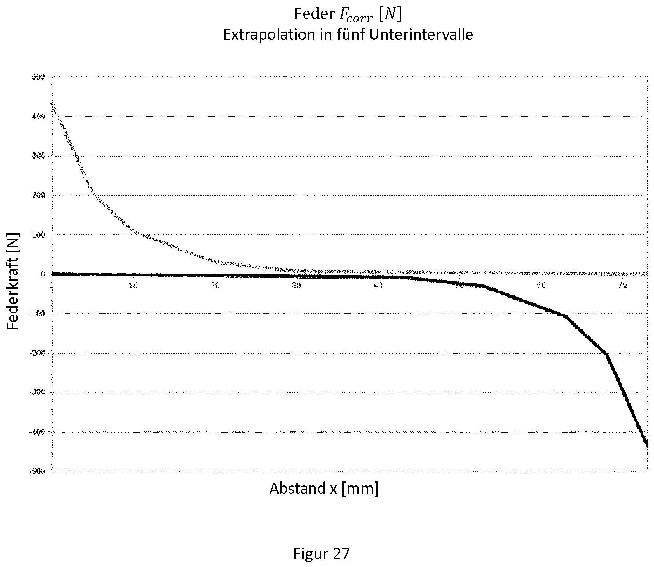

welche beide sich aufgrund der Eigenschaft der Feder ableiten lassen, erhält man Figur 27, in welcher die Federkonstante für fünf Intervalle $x_n \in [0,5,10,20,30,73]$ dargestellt ist.

**Patentansprüche**

1. Magnetvorrichtung umfassend zumindest einen magnetisch erregten Stator (1) und einen magnetisch erregten Translator (2), welcher Translator (2) entlang einer Translatorbewegungsbahn (3) relativ zum Stator (1) bewegbar ist, wobei der Stator (1) ein Permanentmagnet und der Translator (2) ein Elektromagnet ist oder der Stator (1) ein Elektromagnet und der Translator (2) ein Permanentmagnet ist, wobei eine magnetische Kraft $F(x,J)$ zwischen dem Stator (1) und dem Translator (2) mit $x \geq 0$ als der Abstand zwischen Stator und Translator und $J$ als die Stromdichte des Elektromagneten wirkt, wobei eine Beschleunigungseinheit (5) in zumindest Teilbereichen der Translatorbewegungsbahn (3) eine Kraft auf den Translator (2) ausübt, die einen Beschleunigungskraftzustand umfassend zumindest eine Korrekturkraft $F_{corr}(x)$ hervorruft, welcher Beschleunigungskraftzustand vom Stator (1) weg gerichtet ist, **dadurch gekennzeichnet, dass** $F(x,J = 0)$ einen magnetischen Fangeffekt definiert, der einer Sollbewegung des Translators (2) entgegenwirkt, wobei $F(x,J = 0)$ bei keiner Beaufschlagung (J=0) des Elektromagneten durch Messungen bestimmbar ist, und dass

   (a) bei einer Bewegung des Translators (2) vom Stator (1) die Summe der auf den Translator (2) wirkenden Kräfte größer Null ist

$$F(x,J = 0) + F_{corr}(x) > 0, \text{ wobei gilt } F_{corr}(x) > -F(x,J = 0)$$

   oder
   (b) bei einer Bewegung des Translators (2) zum Stator (1) die Summe der auf den Translator (2) wirkenden Kräfte kleiner Null ist

$$F(x, J = 0) + F_{corr}(x) < 0, \text{ wobei gilt } F_{corr}(x) < -F(x, J = 0)$$

oder

(c) bei einem Gleichgewichtszustand des Translators zum Stator die Summe der auf den Translator (2) wirkenden Kräfte gleich null ist

$$F(x, J = 0) + F_{corr}(x) = 0, \text{ wobei gilt } F_{corr}(x) = -F(x, J = 0),$$

sodass die Korrekturkraft $|F_{corr}(x)| \geq |F(x,J = 0)|$ dem Fangeffekt teilweise oder zur Gänze entgegenwirkt.

2. Magnetvorrichtung nach Anspruch 1, **dadurch gekennzeichnet, dass** die Beschleunigungseinheit (5) über die gesamte Translatorbewegungsbahn (3) eine Kraft auf den Translator (2) ausübt.

3. Magnetvorrichtung nach einem der Ansprüche 1 bis 2, **dadurch gekennzeichnet, dass** die Beschleunigungseinheit (5) in Abhängigkeit eines Abstandes des Translators (2) zum Stator (1) bei Annäherung des Translators (2) zum Stator (1) vorspannbar ist und/oder die Beschleunigungseinheit (5) in Abhängigkeit des Abstandes des Translators (2) zum Stator (1) den Beschleunigungskraftzustand hervorruft.

4. Magnetvorrichtung nach einem der Ansprüche 1 bis 3, **dadurch gekennzeichnet, dass** die Beschleunigungseinheit (5) mit dem Translator (2) und einem Fixpunkt (6) gekoppelt ist und sich zumindest zum Teil zwischen dem Translator (2) und dem Fixpunkt (6) erstreckt.

5. Magnetvorrichtung nach einem der Ansprüche 1 bis 4, **dadurch gekennzeichnet, dass** der Stator (1) der Fixpunkt (6) ist.

6. Magnetvorrichtung nach einem der Ansprüche 1 bis 5, **dadurch gekennzeichnet, dass** die Beschleunigungseinheit (5) einen weiteren Magneten oder eine Antriebseinheit wie beispielsweise einen Elektromotor und/oder eine Pneumatikvorrichtung und/oder eine Hydraulikvorrichtung umfasst.

7. Magnetvorrichtung nach einem der Ansprüche 1 bis 6, **dadurch gekennzeichnet, dass** die Beschleunigungseinheit (5) eine Feder umfasst, welche Feder eine parallel zu der Translatorbewegungsbahn (3) wirkende Federkraftkomponente aufweist.

8. Magnetvorrichtung nach einem der Ansprüche 1 bis 7, **dadurch gekennzeichnet, dass** die Translatorbewegungsbahn (3) linear oder polygonal ist.

9. Magnetvorrichtung nach einem der Ansprüche 1 bis 8, **dadurch gekennzeichnet, dass** ein Strahl der Translatorbewegungsbahn (3) durch den Stator (1) verläuft.

10. Magnetvorrichtung nach einem der Ansprüche 1-9, **dadurch gekennzeichnet, dass** die Magnetvorrichtung eine Steuervorrichtung zur Steuerung der Polung des Elektromagneten und der Steuerung der Stärke des Elektromagneten in Abhängigkeit des Beschleunigungskraftzustandes umfasst.

## Claims

1. A magnetic device comprising at least one magnetically excited stator (1) and one magnetically excited translator (2), said translator (2) being movable in relation to the stator (1) along a translator movement path (3),
   wherein the stator (1) is a permanent magnet and the translator (2) is an electromagnet or the stator (1) is an electromagnet and the translator (2) is a permanent magnet,
   wherein a magnetic force $F(x,j)$ acts between the stator (1) and the translator (2), with $x \geq 0$ being the distance between the stator (1) and the translator (2) and $J$ being the current density of the electromagnet,
   wherein an acceleration unit (5) generates a force acting on the translator (2) at least in portions of the translator movement path (3), said force creating an acceleration force state comprising at least a corrective force $F_{corr}(x)$, said acceleration force state being oriented away from the stator (1),
   **characterized in that**

$F(x,J = 0)$ defines a magnetic capture effect counteracting a desired movement of the translator (2), wherein $F(x,J = 0)$ can be determined by measurements when the electromagnet is not supplied with a current (J=0), and that

(a) when the translator (2) moves away from the stator (1), the sum total of the forces acting on the translator (2) is greater than zero

$$F(x, J = 0) + F_{corr}(x) > 0, \text{ hence } F_{corr}(x) > -F(x, J = 0),$$

or
(b) when the translator (2) moves towards the stator (1), the sum total of the forces acting on the translator (2) is smaller than zero

$$F(x, J = 0) + F_{corr}(x) < 0, \text{ hence } F_{corr}(x) < -F(x, J = 0),$$

or
(c) when the translator and the stator are in an equilibrium state, the sum total of the forces acting on the translator (2) is zero

$$F(x, J = 0) + F_{corr}(x) = 0, \text{ hence } F_{corr}(x) = -F(x, J = 0),$$

so that the corrective force $|F_{corr}(x)| \geq |F(x,J = 0)|$ counteracts the capture effect in part or in full.

2. The magnetic device according to claim 1, **characterized in that** the acceleration unit (5) generates a force acting on the translator (2) along the entire translator movement path (3).

3. The magnetic device according to any of the claims 1 to 2, **characterized in that** the acceleration unit (5) is, depending on a distance between the translator (2) and the stator (1), biasable when the translator (2) approaches the stator (1), and/or the acceleration unit (5) causes, depending on the distance between the translator (2) and the stator (1), the acceleration force state.

4. The magnetic device according to any of the claims 1 to 3, **characterized in that** the acceleration unit (5) is coupled to the translator (2) and a fixed point (6) and extends at least partially between the translator (2) and the fixed point (6).

5. The magnetic device according to any of the claims 1 to 4, **characterized in that** the stator (1) is the fixed point (6).

6. The magnetic device according to any of the claims 1 to 5, **characterized in that** the acceleration unit (5) comprises another magnet or a drive unit like, for example, an electric motor and/or a pneumatic device and/or a hydraulic device.

7. The magnetic device according to any of the claims 1 to 6, **characterized in that** the acceleration unit (5) comprises a spring, which spring has a spring force component acting in parallel to the translator movement path (3).

8. The magnetic device according to any of the claims 1 to 7, **characterized in that** the translator movement path (3) is linear or polygonal.

9. The magnetic device according to any of the claims 1 to 8, **characterized in that** one line of the translator movement path (3) runs through the stator (1).

10. The magnetic device according to any of the claims 1 to 9, **characterized in that** the magnetic device comprises a control device for controlling the polarization of the electromagnet and for controlling the strength of the electromagnet depending on the acceleration force state.

**Revendications**

1. Dispositif magnétique comprenant au moins un stator (1) excité magnétiquement et un translateur (2) excité magnétiquement, le translateur (2) pouvant être déplacé relativement au stator (1) suivant une trajectoire de mouvement (3) du translateur,

dans lequel le stator (1) est un aimant permanent et le translateur (2) est un électroaimant ou le stator (1) est un électroaimant et le translateur (2) est un aimant permanent,

dans lequel une force magnétique $F(x,J)$ agit entre le stator (1) et le translateur (2), $x \geq 0$ étant la distance entre le stator (1) et le translateur (2) et $J$ étant la densité de courant de l'électroaimant,

dans lequel une unité d'accélération (5) génère une force agissant sur le translateur (2) au moins sur des portions de la trajectoire de mouvement (3) du translateur, ladite force créant un état de force d'accélération comprenant au moins une force correctrice $F_{corr}(x)$, cet état de force d'accélération étant orienté dans la direction opposée au stator (1),

**caractérisé en ce que**

$F(x,J = 0)$ définit un effet de capture magnétique agissant contre le mouvement désiré du translateur (2), $F(x,J = 0)$ pouvant être déterminé par mesures lorsque l'électroaimant n'est pas alimenté par un courant ($J = 0$), et **en ce que**

(a) lorsque le translateur (2) s'éloigne du stator (1), le total des forces agissant sur le translateur (2) est supérieur à zéro

$$F(x, J = 0) + F_{corr}(x) > 0, \text{ d'où } F_{corr}(x) > -F(x, J = 0),$$

ou

(b) lorsque le translateur (2) s'approche du stator (1), le total des forces agissant sur le translateur (2) est inférieur à zéro

$$F(x, J = 0) + F_{corr}(x) < 0, \text{ d'où } F_{corr}(x) < -F(x, J = 0),$$

ou

(c) lorsque le translateur et le stator se trouvent dans un état d'équilibre, le total des forces agissant sur le translateur (2) est égal à zéro

$$F(x, J = 0) + F_{corr}(x) = 0, \text{ d'où } F_{corr}(x) = -F(x, J = 0)$$

de sorte que la force correctrice $|F_{corr}(x)| \geq |F(x,J = 0)|$ agit partiellement ou intégralement contre l'effet de capture.

2. Dispositif magnétique selon la revendication 1, **caractérisé en ce que** l'unité d'accélération (5) génère une force agissant sur le translateur (2) sur l'intégralité de la trajectoire de mouvement (3) du translateur.

3. Dispositif magnétique selon l'une des revendications 1 à 2, **caractérisé en ce que** l'unité d'accélération (5) peut être, selon une distance entre le translateur (2) et le stator (1), précontrainte lorsque le translateur (2) se rapproche du stator (1) et/ou **en ce que** l'unité d'accélération (5) génère l'état de force d'accélération en fonction de la distance entre le translateur (2) et le stator (1).

4. Dispositif magnétique selon l'une des revendications 1 à 3, **caractérisé en ce que** l'unité d'accélération (5) est couplée au translateur (2) et à un point fixe (6) et s'étend au moins partiellement entre le translateur (2) et le point fixe (6).

5. Dispositif magnétique selon l'une des revendications 1 à 4, **caractérisé en ce que** le Stator (1) est le point fixe (6).

6. Dispositif magnétique selon l'une des revendications 1 à 5, **caractérisé en ce que** l'unité d'accélération (5) comprend un autre aimant ou une unité d'entraînement comme, par exemple, un moteur électrique et/ou une dispositif pneumatique et/ou un dispositif hydraulique.

7. Dispositif magnétique selon l'une des revendications 1 à 6, **caractérisé en ce que** l'unité d'accélération (5) comprend un ressort, ledit ressort ayant une composante de sa force de rappel agissant en parallèle à la trajectoire de mouvement (3) du translateur.

**8.** Dispositif magnétique selon l'une des revendications 1 à 7, **caractérisé en ce que** la trajectoire de mouvement (3) du translateur est linéaire ou polygonale.

**9.** Dispositif magnétique selon l'une des revendications 1 à 8, **caractérisé en ce que** une ligne de la trajectoire de mouvement (3) du translateur traverse le stator (1).

**10.** Dispositif magnétique selon l'une des revendications 1 à 9, **caractérisé en ce que** le dispositif magnétique comprend un dispositif de commande pour contrôler la polarisation de l'électroaimant et pour contrôler la force de l'électroaimant en fonction de l'état de force d'accélération.

Figur 1

Figur 2

Figur 3

Figur 4

Figur 5

Magnetfeldstärke [mT] und Feldlinien bei $J_{coil} = 0\ [\frac{A}{mm^2}]$

| Abstand 60,0mm | Abstand 30,0mm | Abstand 10,0mm | Abstand 0,0mm |

Figur 6

Interaktionskraft [N]

$$J_{coil} = 0\ [\frac{A}{mm^2}]$$

Abstand x [mm]

Figur 7

Magnetfeldstärke [mT] und Feldlinien bei $J_{coil} = 5 \left[\frac{A}{mm^2}\right]$

| Abstand 60,0mm | Abstand 30,0mm | Abstand 10,0mm | Abstand 0,0mm |

Figur 8

Interaktionskraft [N]

$$J_{coil} = 5 \left[\frac{A}{mm^2}\right]$$

Abstand x [mm]

Figur 9

Magnetfeldstärke [mT] und Feldlinien bei $J_{coil} = -5\ [\frac{A}{mm^2}]$

Abstand 60,0mm　　Abstand 30,0mm　　Abstand 10,0mm　　Abstand 0,0mm

Figur 10

Interaktionskraft [N]

$$J_{coil} = -5\ [\frac{A}{mm^2}]$$

Abstand x [mm]

Figur 11

Interaktionskraft [N]

$$J_{coil} \leq 0 \; [\frac{A}{mm^2}]$$

Abstand x [mm]

Figur 12

Interaktionskraft [N]

$$J_{coil} \geq 0 \; [\frac{A}{mm^2}]$$

Figur 13

Interaktionskraft [N]

$$|J_{coil} =|10 \; [\frac{A}{mm^2}]$$

Figur 14

Korrekturkraft $F_{corr}$ $[N]$

Figur 15

Interaktionskraft [N]

$$|J_{coil} =|10 \ [\frac{A}{mm^2}]$$

Figur 16

Figur 17

Interaktionskraft [N]

$$J_{coil} = 0 \; [\frac{A}{mm^2}]$$

Abstand x [mm]

Figur 18

3-Dipol Interaktionskraft [N] $J_{coil} > 0$ $[\frac{A}{mm^2}]$
Bewegung des Translators von rechts nach links

Figur 19

3-Dipol Interaktionskraft [N] $J_{coil} < 0$ $[\frac{A}{mm^2}]$
Bewegung des Translators von links nach rechts

Abstand x [mm]

Figur 20

3-Dipol Interaktionskraft [N]

$$|J_{coil}| = 10 \ [\tfrac{A}{mm^2}]$$

Figur 21

3-Dipol Interaktionskraft [N]

$$|J_{coil}| = 10 \left[\frac{A}{mm^2}\right]$$

Figur 22

3-Dipol Interaktionskraft [N] mit Korrektur bei

$$|J_{coil}| = 10 \ [\frac{A}{mm^2}]$$

Abstand x [mm]

Figur 23

3-Dipol Interaktionskraft [N]

$$|J_{coil}| \leq 10 \, [\frac{A}{mm^2}]$$

Figur 24

Korrigiertes Kraftprofil

Figur 25

Figur 26

Feder $F_{corr}$ $[N]$
Extrapolation in fünf Unterintervalle

Figur 27

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- AT 20110001260
- AT 20110905, Anmelder Jeremy Hein, Martin Marschner von Helmreich
- DE 10003928
- WO 2007063222 A
- DE 102007051917
- DE 102006013013
- EP 1995090 A
- US 8222754 B
- EP 1320178 A
- DE 102997051917
- DE 202009014192